# EUROPEAN PATENT APPLICATION

(11) **EP 4 513 817 A1**
(43) Date of publication of application: **26.02.2025**
(21) Application number: 23851969.8
(22) Date of filing: 11.08.2023
(51) Int. Cl.: H04L 5/00

(54) **RESOURCE MAPPING METHOD, AND DEVICE AND STORAGE MEDIUM**

(30) Priority: 12.08.2022 CN 202210968389
(71) Applicant: ZTE Corporation, Shenzhen, Guangdong 518057 (CN)
(72) Inventor: LU, Youxiong, Shenzhen, Guangdong 518057 (CN); XING, Weimin, Shenzhen, Guangdong 518057 (CN); BI, Feng, Shenzhen, Guangdong 518057 (CN); CHEN, Jie, Shenzhen, Guangdong 518057 (CN)
(74) Representative: Aipex B.V.
(86) International application number: PCT/CN2023/112450
(87) International publication number: WO 2024/032749

(57) **Abstract**

Provided are a resource mapping method, a device and a storage medium. The resource mapping method applied to a first communication node includes the following. A slot aggregation level, the number of first symbols and a first symbol position of sidelink communication are determined (S210). A resource mapping manner for the sidelink communication using the second subcarrier spacing is determined according to the slot aggregation level, the number of first symbols and the first symbol position (S220). The number of first symbols refers to the number of first symbols used for the sidelink communication in a first slot; the first symbol position is a start symbol position of the first symbols in the first slot; the first slot is a slot used for the sidelink communication corresponding to a first subcarrier spacing; the slot aggregation level is a mapping relationship between a slot of a second subcarrier spacing and a slot of the first subcarrier spacing.

## Description

### TECHNICAL FIELD

The present application relates to the technical field of communications, for example, a resource mapping method, a device and a storage medium.

### BACKGROUND

In the New Radio sidelink (NR SL) communication process, multiple subcarrier spacings (SCSs) such as the subcarrier spacing of 15kHz, the subcarrier spacing of 30kHz, the subcarrier spacing of 60kHz or the subcarrier spacing of 120kHz can be supported. For carrier aggregation communication, information can be sent simultaneously on multiple carriers. If the SCS configuration on different carriers is different, slots have different time domain lengths, or the SL uses different numbers of symbols. At this time, if an original frame structure is used, the automatic gain control (AGC) problem may be caused, thereby affecting communication performance.

### SUMMARY

Embodiments of the present application provide a resource mapping method, a device and a storage medium, which achieves symbol alignment of sidelink transmission using different subcarriers, avoids the automatic gain control (AGC) problem, and ensures communication performance.

The embodiments of the present application provide a resource mapping method. The resource mapping method is applied to a first communication node and includes the following.

A slot aggregation level, the number of first symbols and a first symbol position of sidelink communication are determined. A resource mapping manner for sidelink communication using a second subcarrier spacing is determined according to the slot aggregation level, the number of first symbols and the first symbol position. The number of first symbols refers to the number of first symbols used for the sidelink communication in a first slot; the first symbol position is a start symbol position of the first symbols in the first slot; the first slot is a slot used for the sidelink communication corresponding to a first subcarrier spacing; the slot aggregation level is a mapping relationship between a slot of the second subcarrier spacing and a slot of the first subcarrier spacing.

The embodiments of the present application provide a resource mapping method. The resource mapping method is applied to a second communication node and includes the following.

A parameter related to a slot aggregation level, the number of first symbols and a first symbol position of sidelink communication are indicated to a first communication node so that the first communication node determines, according to the parameter related to the slot aggregation level, the number of first symbols and the first symbol position, a resource mapping manner for sidelink communication using a second subcarrier spacing.

The embodiments of the present application provide a communication device. The communication device includes a memory and one or more processors. The memory is configured to store one or more programs. When executed by the one or more processors, the one or more programs cause the one or more processors to perform the resource mapping method described in any of the preceding embodiments.

The embodiments of the present application provide a storage medium storing a computer program which, when executed by a processor, performs the resource mapping method described in any of the preceding embodiments.

### BRIEF DESCRIPTION OF DRAWINGS

FIG. 1 is a configuration diagram of a resource mapping manner according to the related art;
FIG. 2 is a flowchart of a resource mapping method according to an embodiment of the present application;
FIG. 3 is a flowchart of another resource mapping method according to an embodiment of the present application;
FIG. 4 is a diagram of resource mapping according to an embodiment of the present application;
FIG. 5 is a configuration diagram of synchronization resources according to an embodiment of the present application;
FIG. 6 is another configuration diagram of synchronization resources according to an embodiment of the present application;
FIG. 7 is another diagram of synchronization resource mapping according to an embodiment of the present application;
FIG. 8 is a diagram of resource mapping aggregating multiple slots according to an embodiment of the present application;
FIG. 9 is another diagram of resource mapping aggregating multiple slots according to an embodiment of the present application;
FIG. 10 is another diagram of resource mapping aggregating multiple slots according to an embodiment of the present application;
FIG. 11 is another diagram of resource mapping aggregating multiple slots according to an embodiment of the present application;
FIG. 12 is another diagram of resource mapping aggregating multiple slots according to an embodiment of the present application;
FIG. 13 is another diagram of resource mapping aggregating multiple slots according to an embodiment of the present application;
FIG. 14 is a block diagram of a resource mapping apparatus according to an embodiment of the present application;
FIG. 15 is a block diagram of another resource mapping apparatus according to an embodiment of the present application; and
FIG. 16 is a structural diagram of a communication device according to an embodiment of the present application.

### DETAILED DESCRIPTION

Embodiments of the present application are described hereinafter in conjunction with drawings. The present application is described below in conjunction with embodiments and the drawings, and the examples illustrated are intended to explain the present application.

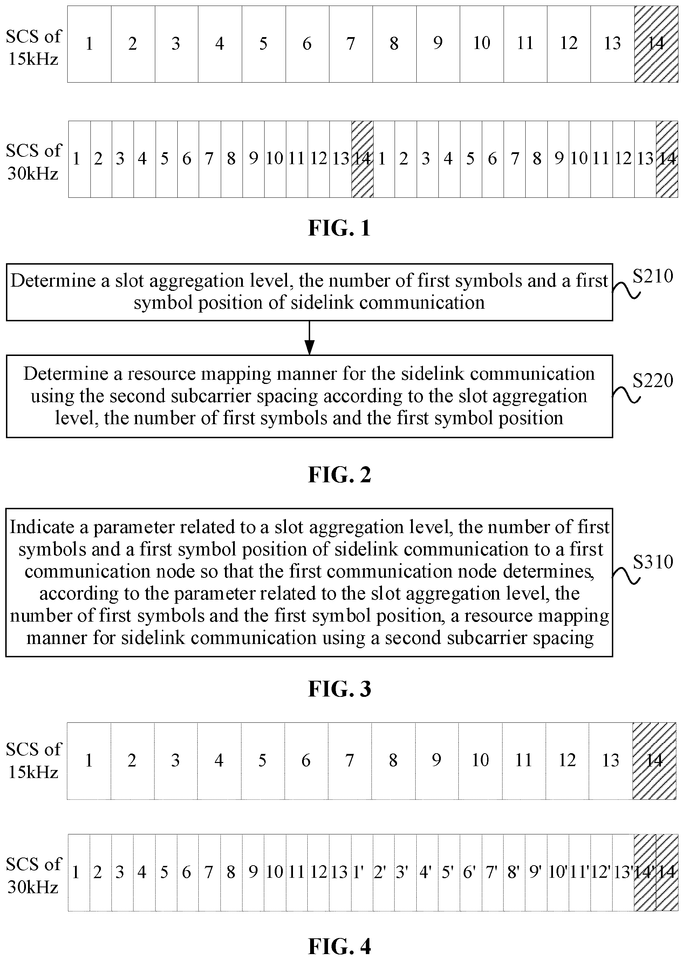

For carrier aggregation communication, a user equipment (UE) needs to send information simultaneously on multiple carriers. If the SCS configuration is different for different carriers, slot duration is different, or sidelink (SL) uses different numbers of symbols. If an original frame structure is used, the automatic gain control (AGC) problem may be caused. FIG. 1 is a configuration diagram of a resource mapping manner according to the related art. As shown in FIG. 1, in Release 16 or 17 (Rel-16/Rel-17), for the subcarrier spacing (SCS) of 15kHz, an SL frame structure uses 14 symbols; for the SCS of 30kHz, an SL frame structure also use 14 symbols, and the last symbol in a slot or the last sidelink symbol in a slot serves as an AGC symbol and does not send an information signal. As a result, the AGC problem occurs on symbol #7 in the SL frame structure of which the SCS is 15kHz and symbol #13 of the 2nd slot in the SL frame structure of which the SCS is 30kHz, seriously affecting communication performance.

In view of this, an embodiment of the present application provides a resource mapping method that ensures symbol alignment and avoids the AGC problem while information can be sent simultaneously on multiple carriers of different SCSs, thereby ensuring the communication performance.

In an embodiment, FIG. 2 is a flowchart of a resource mapping method according to an embodiment of the present application. The embodiment is applied to the case of ensuring symbol alignment when information is sent simultaneously on multiple different carriers. The embodiment may be performed by a first communication node. Exemplarily, the first communication node may be a terminal. As shown in FIG. 2, the embodiment includes S210 and S220.

In S210, a slot aggregation level, the number of first symbols and a first symbol position of sidelink communication are determined.

The number of first symbols refers to the number of first symbols used for the sidelink communication in a first slot; the first symbol position is a start symbol position of the first symbols in the first slot; the first slot is a slot used for the sidelink communication corresponding to a first subcarrier spacing; the slot aggregation level is a mapping relationship between a slot of a second subcarrier spacing and a slot of the first subcarrier spacing. The first subcarrier spacing is a subcarrier spacing corresponding to a bandwidth part (BWP) where a resource pool used for the sidelink communication is located.

In the embodiment, the first communication node receives a parameter related to a slot aggregation level, the number of first symbols and the first symbol position which are indicated by a second communication node and obtains the slot aggregation level of the sidelink communication through the parameter related to the slot aggregation level.

In S220, a resource mapping manner for the sidelink communication using the second subcarrier spacing is determined according to the slot aggregation level, the number of first symbols and the first symbol position.

The second subcarrier spacing is a subcarrier spacing corresponding to a bandwidth part where the resource pool used for the sidelink communication is located. The resource mapping manner refers to a mapping relationship between symbols used for the sidelink communication corresponding to the first subcarrier spacing and symbols used for the sidelink communication corresponding to the second subcarrier spacing when the subcarrier spacing changes. In the embodiment, the first communication node determines the resource mapping manner for the sidelink communication using the second subcarrier spacing according to the slot aggregation level, the number of first numbers and the first symbols position to ensure alignment between the first symbols and the second symbols, thus ensuring communication performance.

In an embodiment, the slot aggregation level being the mapping relationship between the slot of the second subcarrier spacing and the slot of the first subcarrier spacing includes at least one of the following.

The slot aggregation level is a ratio of the second subcarrier spacing to the first subcarrier spacing; the slot aggregation level is 2 to the power of k, where k is a difference between a second subcarrier spacing index and a first subcarrier spacing index; the slot aggregation level is a ratio of slot duration of the first subcarrier spacing to slot duration of the second subcarrier spacing; the slot aggregation level is a ratio of the number of second symbols to the number of first symbols; or the slot aggregation level is a ratio of the number of guard interval (GI) symbols among second symbols to the number of guard interval symbols among the first symbols.

Exemplarily, it is assumed that the first subcarrier spacing and the second subcarrier spacing are 15kHz and 30kHz respectively, and thus the slot aggregation level is the ratio of the second subcarrier spacing to the first subcarrier spacing, that is, 2.

Exemplarily, it is assumed that the first subcarrier spacing is 15 * 2⁰kHz, that is, the first subcarrier spacing index is 0, and the second subcarrier spacing is 15*2¹kHz, that is, the second subcarrier spacing index is 1, and thus the slot aggregation level is 2 to the power of k (that is, 2^{k} is equal to 2⁽¹⁻⁰⁾), where k is the difference between the second subcarrier spacing index and the first subcarrier spacing index.

In the embodiment, the slot duration of the first subcarrier spacing refers to the duration occupied by one slot corresponding to the first subcarrier spacing; the slot duration of the second subcarrier spacing refers to the duration occupied by one slot corresponding to the second subcarrier spacing. The larger the subcarrier spacing, accordingly, the shorter the slot duration.

The number of second symbols refers to the number of second symbols used for the sidelink communication in a second slot; the second slot is a slot used for the sidelink communication and corresponding to the second subcarrier spacing. Exemplarily, it is assumed that the first subcarrier spacing and the second subcarrier spacing are 15kHz and 30kHz respectively, the number of first symbols is 14 and the number of second symbol symbols is 28, and thus the slot aggregation level satisfies that 28/14 = 2.

In the embodiment, a guard interval symbol may be configured in each slot so that overlap during the transmission and reception conversion process is avoided. Exemplarily, it is assumed that the first subcarrier spacing and the second subcarrier spacing are 15kHz and 30kHz respectively, the number of guard interval symbols among the first symbols is 1, the number of guard interval symbols among the second symbols is 2, and thus the slot aggregation level is 2.

In an embodiment, the slot aggregation level may also be the ratio of the number of symbols used for the sidelink communication corresponding to the second subcarrier spacing to the number of symbols used for the sidelink communication corresponding to the first subcarrier spacing. The slot aggregation level is the ratio of the number of second symbols to the number of first symbols.

In an embodiment, determining the resource mapping manner for the sidelink communication using the second subcarrier spacing according to the slot aggregation level, the number of first symbols and the first symbol position includes the following.

The number of second symbols, the number of effective second symbols and a second symbol position are determined according to the slot aggregation level, the number of first symbols and the first symbol position; and one transmission block is mapped according to second symbols corresponding to the number of effective second symbols and the second symbol position, where the second symbols corresponding to the number of effective second symbols include symbols other than a guard interval symbol among second symbols corresponding the number of second symbols.

In the embodiment, the second symbols corresponding to the number of effective second symbols do not include a guard interval symbol, that is, the second symbols corresponding to the number of effective second symbols include symbols other than the guard interval symbol among the second symbols corresponding to the number of second symbols.

The second symbol position is a start symbol position of the second symbols in the second slot. In the embodiment, the second symbol position is determined according to the slot aggregation level and the first symbol position, the number of second symbols and the number of effective second symbols are determined according to the number of first symbols and the slot aggregation level, and one transmission block is mapped on the second symbols corresponding to the number of effective second symbols. One transmission block is mapped by using all effective symbols (that is, the second symbols corresponding to the number of effective second symbols) aggregated by using the slot aggregation level. Exemplarily, it is assumed that the number of first symbols is 14, the slot aggregation level is 2, the first symbol position is symbol 1 among the first symbols, then it is determined that the second symbol position is symbol 1 among the second symbols, the number of second symbols is 28, and the number of effective second symbols is 26; thus, starting from symbol 1 among the second symbols, one transmission block is mapped by using 26 second symbols.

In an embodiment, the number of second symbols includes at least one of the following.

The number of second symbols is the number of second symbols within the same time range as the first symbols; or the number of second symbols is a product of the number of first symbols and the slot aggregation level.

In the embodiment, the number of second symbols refers to the total number of second symbols within the same time range as the first symbols; the product of the number of first symbols and the slot aggregate level may be directly used as the number of second symbols; or the number of second symbols may be N times the number of first symbols. N is the slot aggregation level.

In an embodiment, the second symbol position includes at least one of the following.

The second symbol position is a position of the 1st symbol among the second symbols, where the second symbol position is at the same time domain position as a position of the 1st symbol among the first symbols; the second symbol position is a serial number of the 1st symbol among the second symbols, where the serial number is a product of a serial number of the 1st symbol among the first symbols and the slot aggregation level, and a serial number of the first symbol in a slot is 0; or the second symbol position is a serial number of the 1st symbol among the second symbols, where the serial number is obtained by adding 1 to a product of a serial number, which is decreased by 1, of a 1st symbol among the first symbols and the slot aggregation level, and a serial number of a 1st symbol in a slot is 1; serial numbers of the second symbols are sequential numbers of all of the second symbols.

In the embodiment, in the case where a serial number of the first symbol in a slot is 0, a serial number of the 1st symbol among the second symbols is also 0; in the case where a serial number of the first symbol in a slot is 1, a serial number of the 1st symbol among the second symbols is also 1.

In an embodiment, the second symbols further include a guard interval symbol.

The number of guard interval symbols is the same as the slot aggregation level; and the guard interval symbol is the last N symbols among symbols used for the sidelink communication within an aggregated slot obtained from the slot aggregation level. In the embodiment, the second symbols further include N guard interval symbols, and the N guard interval symbols are located at the last positions of symbols used for the sidelink communication within an aggregated slot obtained by using the slot aggregation level, that is, the last N symbols among the second symbols are guard interval symbols, where N is the slot aggregation level.

In an embodiment, determining the resource mapping manner for the sidelink communication using the second subcarrier spacing according to the slot aggregation level, the number of first symbols and the first symbol position includes the following.

The number of second symbols, the number of effective second symbols and a second symbol position are determined according to the slot aggregation level, the number of first symbols and the first symbol position; and one transmission block is mapped by selecting, according to the second symbol position, second symbols corresponding to the number of effective first symbols from second symbols corresponding to the number of effective second symbols, where the number of effective first symbols includes the number of symbols other than a guard interval symbol among first symbols corresponding the number of first symbols, and the second symbols corresponding to the number of effective second symbols include symbols other than a guard interval symbol among second symbols corresponding to the number of second symbols.

In an embodiment, one transmission block is mapped by selecting, according to the second symbol position, second symbols corresponding to the number of effective first symbols from second symbols corresponding to the number of effective second symbols, where the symbols corresponding to the effective number do not include a guard interval symbol, that is, the symbols corresponding to the effective number include symbols other than the guard interval symbol. In an embodiment, the number of second symbols and the number of effective second symbols are determined according to the slot aggregation level and the number of first symbols, the second symbols position is determined according to the slot aggregation level and the first symbols position, and starting from the second symbol position, the first transmission block is mapped by successively selecting second symbols corresponding to the number of effective first symbols from the second symbols corresponding to the number of effective second symbols until mapping of N transmission blocks is completed. N is the slot aggregation level and may also be understood as the number of transmission blocks. Exemplarily, it is assumed that the number of first symbols is 14, the slot aggregation level is 2, and the first symbol position is symbol 1 among the first symbols, then it is determined that the second symbol position is symbol 1 among the second symbols, the number of second symbols is 28, the number of effective second symbols is 26; thus, starting from symbol 1 among the second symbols, the first transmission block is mapped by using 13 second symbols, and starting from the 14th second symbol, the second transmission block is mapped by using 13 second symbols.

In an embodiment, mapping one transmission block includes mapping of a first channel corresponding to the one transmission block.

The mapping of the first channel corresponding to the one transmission block includes one of: mapping of a physical sidelink control channel (PSCCH) corresponding to the one transmission block; or mapping of a physical sidelink shared channel (PSSCH) corresponding to the one transmission block.

In an embodiment, determining the resource mapping manner for the sidelink communication using the second subcarrier spacing according to the slot aggregation level, the number of first symbols and the first symbol position includes the following.

The number of second symbols and a second symbol position are determined according to the slot aggregation level, the number of first symbols and the first symbol position; and a second channel or a second signal is mapped according to second symbols corresponding to the number of second symbols and the second symbol position.

In the embodiment, after the number of second symbols and the second symbol position are determined, a start symbol position in the second slot is determined according to the second symbol position, and the second channel or the second signal is mapped.

In an embodiment, the second channel or the second signal includes at least one of: a sidelink synchronization signal; a physical sidelink discovery channel (PSDCH); a physical sidelink feedback channel (PSFCH); a sidelink positioning signal; or a sidelink channel state information reference signal (CSI-RS).

In an embodiment, the number of first symbols and the first symbol position include the predefined number of symbols and a predefined symbol position of a second channel under the first subcarrier spacing or the predefined number of symbols and a predefined symbol position of a second signal under the first subcarrier spacing.

In an embodiment, the number of first symbols and the first symbol position include at least one of the following.

For a physical sidelink feedback channel, the number of first symbols is 2, and the first symbol position is calculated or indicated by a configuration parameter; for a sidelink synchronization signal and channel, the number of first symbols is 14, and the first symbol position is the first symbol in the 1st slot; for a sidelink discovery channel, both the number of first symbols and the first symbol position are calculated or indicated by a configuration parameter; for a sidelink positioning signal, both the number of first symbols and the first symbol position are calculated or indicated by a configuration parameter; or for a sidelink channel state information reference signal, both the number of first symbols and the first symbol position are calculated or indicated by a configuration parameter. For a sidelink synchronization signal and channel, the first symbol position may be 0, that is, may be the first symbol in the first slot.

In an embodiment, the resource mapping method applied to the first communication node further includes the following.

A synchronization resource configuration message sent by the second communication node is received, a resource pool where second symbols corresponding to the second subcarrier spacing are located is determined according to the synchronization resource configuration message, where synchronization resources in the resource pool include a first-type synchronization resource and a second-type synchronization resource.

The synchronization resource configuration message is a message used for configuring synchronization resources when sidelink communication of different SCSs coexists. In the embodiment, coexistence refers to coexistence within the same band, the same carrier or the same bandwidth part (BWP). In the embodiment, the second communication node performs resource configuration, generates a corresponding synchronization resource configuration message and sends the synchronization resource configuration message to the first communication node so that the first communication node determines, according to the synchronization resource configuration message, a resource pool where second symbols used for the sidelink communication using the second subcarrier spacing are located. In this manner, technical problems in the related art of synchronization resource configuration, sidelink resource pool configuration and feedback resource configuration when New Radio (NR) sidelinks coexist are solved.

In an embodiment, the synchronization resource configuration message includes a first-type synchronization resource configuration message and a second-type synchronization resource configuration message, where the first-type synchronization resource configuration message is used for indicating the first-type synchronization resource; and the second-type synchronization resource configuration message is used for indicating the second-type synchronization resource. In the embodiment, two types of synchronization resources are indicated by two individual configuration messages, that is, the first-type synchronization resource is indicated by the first-type synchronization resource configuration message, and the second-type synchronization resource is indicated by the second-type synchronization resource configuration message.

In an embodiment, when the first-type synchronization resource is mapped in the resource pool, the first-type synchronization resource within a system frame period is excluded; when the second-type synchronization resource is mapped in the resource pool, the second-type synchronization resource within a system frame period is not excluded. Exemplarily, the system frame period may be 10240ms. In the embodiment, in a system frame period, one type or multiple types of synchronization resources may be configured in each synchronization resource group, that is, the first-type synchronization resource is configured, or the second-type synchronization resource is configured, or the first-type synchronization resource and the second-type synchronization resource are simultaneously configured.

In an embodiment, in the case where the first-type synchronization resource configuration message is received, when mapping is performed in the resource pool where the second symbols corresponding to the second subcarrier spacing are located, the first-type synchronization resource within a system frame period is excluded. In an embodiment, in the case where the second-type synchronization resource configuration message is received, when mapping is performed in the resource pool where the second symbols corresponding to the second subcarrier spacing are located, the second-type synchronization resource within a system frame period is excluded.

In an embodiment, a bearer message of the synchronization resource configuration message includes one of: a system broadcast message, a dedicated system message or a preconfiguration message. The dedicated system message refers to a system message sent by the second communication node to one first communication node. The system broadcast message refers to a system message broadcasted by the second communication node to multiple first communication nodes. In an example, the second communication node may send the dedicated system message or the system broadcast message to the first communication node and make the synchronization resource configuration message carried in the dedicated system message or the system broadcast message. In an example, the synchronization resource configuration message may also be directly acquired according to a preconfiguration message. The preconfiguration message may be prestored in a device, configured using higher-layer signaling, or obtained by negotiation between the first communication node and the second communication node, which is not limited.

In an embodiment, an indication manner of the first-type synchronization resource includes: a system predefines the 1st resource in the synchronization resource configuration message as the first-type synchronization resource. In the embodiment, according to the system predefinition manner, the 1st resource in one synchronization resource group is the first-type synchronization resource, that is, when mapping is performed on the resource pool, the synchronization resource is excluded from the resource pool.

In an embodiment, an indication manner of the first-type synchronization resource includes: one resource among synchronization resources corresponding to the synchronization resource configuration message is indicated as the first-type synchronization resource by using a first-type synchronization resource index. The first-type synchronization resource index refers to a serial number of the first-type synchronization resource within one period. In the embodiment, the first communication node may indicate the first-type synchronization resource among the synchronization resources by using the first-type synchronization resource index. Exemplarily, it is assumed that the first-type synchronization resource index is 2, and the second synchronization resource in a synchronization period is the first-type synchronization resource.

In an embodiment, an indication manner of the first-type synchronization resource includes: synchronization resources corresponding to the synchronization resource configuration message are indicated by using a bitmap, and a synchronization resource of which the value is 1 in the bitmap is the first-type synchronization resource. The bitmap indicates that a synchronization resource is the first-type synchronization resource or the second-type synchronization resource. In the embodiment, the synchronization resource of which the value is 1 in the bitmap may be used as the first-type synchronization resource.

In an embodiment, an indication manner of the first-type synchronization resource includes: the first-type synchronization resource is indicated by a first-type synchronization resource configuration message. In the embodiment, the first-type synchronization resource may be individually configured by a system message, that is, the first-type synchronization resource is indicated by the first-type synchronization resource configuration message.

In an embodiment, an indication manner of the second-type synchronization resource includes: a synchronization resource other than the first-type synchronization resource in the synchronization resource configuration message is the second-type synchronization resource. In the embodiment, it is configured in the synchronization resource configuration message that synchronization resources other than the first-type synchronization resource among the synchronization resources are second-type synchronization resources.

In an embodiment, an indication manner of the second-type synchronization resource includes: synchronization resources corresponding to the synchronization resource configuration message are indicated by using a bitmap, and a synchronization resource of which the value is 0 in the bitmap is the second-type synchronization resource. In the embodiment, the bitmap is used for indicating that a synchronization resource is the first-type synchronization resource or the second-type synchronization resource. In an embodiment, the synchronization resource of which the value is 0 in the bitmap is used as the second-type synchronization resource.

In an embodiment, an indication manner of the second-type synchronization resource includes: the second-type synchronization resource is indicated by a second-type synchronization resource configuration message. In the embodiment, the second-type synchronization resource may be directly indicated by the individual second-type synchronization resource configuration message.

In an embodiment, determining the resource pool where the second symbols corresponding to the second subcarrier spacing are located according to the synchronization resource configuration message includes one of the following.

In the case where resource sensing is performed in the resource pool, a resource in a slot corresponding to the second-type synchronization resource is not sensed; in the case where resource selection is performed in the resource pool, a resource in the same slot as the second-type synchronization resource is not selected; in the case where data is sent and a used resource is in the same slot as the second-type synchronization resource, a current sending opportunity is abandoned; or in the case where data is sent and a used resource is in the same slot as the second-type synchronization resource, resource reselection is triggered. In the case where data is sent, the first communication node may perform, according to the synchronization resource configuration message, selection in the resource pool where the second symbols corresponding to the second subcarrier spacing are located. In an embodiment, in the case where the first communication node performs sensing in the resource pool, the first communication node does not sense the resource in the slot where the second-type synchronization resource is located. In an embodiment, in the case where the first communication node performs resource selection in the resource pool, the first communication node does not select the resource in the same slot as the second-type synchronization resource. In an embodiment, in the case where the first communication node sends data and the used resource is in the same slot as the second-type synchronization resource, the first communication node abandons the current sending opportunity. In an embodiment, in the case where the first communication node sends data and the used resource is in the same slot as the second-type synchronization resource, resource reselection is triggered, and the first communication node selects another resource for data sending.

In an embodiment, determining the resource pool where the second symbols corresponding to the second subcarrier spacing are located according to the synchronization resource configuration message includes one of the following.

In the case where a feedback message is sent and a used resource is in the same slot as the second-type synchronization resource, a current sending opportunity is abandoned; in the case where a feedback message is received and a used resource is in the same slot as the second-type synchronization resource, a current reception opportunity is abandoned, and a reception result of the current feedback message is configured as negative acknowledgement (NACK); a feedback resource and the second-type synchronization resource are configured in different slots; for a synchronization resource in a receiving resource pool, only the first-type synchronization resource is configured; in the case where another signal or channel is sent and a used resource is in the same slot as the second-type synchronization resource, a current sending opportunity is abandoned; or in the case where another signal or channel is received and a used resource is in the same slot as the second-type synchronization resource, a current reception opportunity is abandoned.

The feedback message is used for characterizing whether information is successfully received or sent. In the embodiment, the feedback information may include acknowledgement (ACK) or negative acknowledgement (NACK). In the embodiment, in the case where the first communication node sends or receives the feedback message or sends or receives another signal or channel, the first communication node may determines, by using the synchronization resource configuration message, the resource pool where the second symbols corresponding to the second subcarrier spacing are located. In an embodiment, in the case where the first communication node sends the ACK or NACK, if the used resource is in the same slot as the second-type synchronization resource, the first communication node abandons the current sending opportunity. In an embodiment, in the case where the first communication node receives the ACK or NACK, if the used resource is in the same slot as the second-type synchronization resource, the first communication node abandons reception of the current ACK or NACK and determines that the result of the current feedback message is NACK. In an embodiment, the first communication node does not expect that the slot of the feedback resource to be in the same time slot as the slot of the second-type synchronization resource. In an embodiment, in the case where the first communication node sends another signal or channel, if the used resource is in the same slot as the second-type synchronization resource, the first communication node abandons the current sending opportunity. In an embodiment, in the case where the first communication node receives another signal or channel, if the used resource is in the same slot as the second-type synchronization resource, the first communication node abandons the current reception opportunity.

In an embodiment, the another channel may include one of: an SL control channel, an SL shared channel, an SL discovery channel or an SL feedback channel. In an embodiment, the another signal may include one of: an SL synchronization signal, an SL positioning signal or an SL channel state information reference signal.

In an embodiment, FIG. 3 is a flowchart of another resource mapping method according to an embodiment of the present application. The embodiment is applied to the case of ensuring symbol alignment when information is sent simultaneously on multiple different carriers. The embodiment may be implemented by a second communication node. Exemplarily, the second communication node may be a base station. As shown in FIG. 3, the resource mapping method in the embodiment includes S310.

In S310, a parameter related to a slot aggregation level, the number of first symbols and a first symbol position of sidelink communication are indicated to a first communication node so that the first communication node determines, according to the parameter related to the slot aggregation level, the number of first symbols and the first symbol position, a resource mapping manner for sidelink communication using a second subcarrier spacing.

The parameter related to the slot aggregation level refers to a related parameter that can be used for calculating a slot aggregation level. In an embodiment, the slot-aggregation level-related parameter includes the slot aggregation level. In an embodiment, the parameter related to the slot aggregation level may include a second subcarrier spacing and a first subcarrier spacing. In an embodiment, the parameter related to the slot aggregation level may include a second subcarrier spacing index and a first subcarrier spacing index. In an embodiment, the parameter related to the slot aggregation level may include slot duration of a first subcarrier spacing and slot duration of a second subcarrier spacing index. In an embodiment, the parameter related to the slot aggregation level may include the number of second symbols and the number of first symbols. In an embodiment, the parameter related to the slot aggregation level may include the number of guard interval symbols among second symbols and the number of guard interval symbols among first symbols.

In an embodiment, the slot aggregation level being a mapping relationship between a slot of the second subcarrier spacing and a slot of the first subcarrier spacing includes at least one of the following.

The slot aggregation level is a ratio of the second subcarrier spacing to the first subcarrier spacing; the slot aggregation level is 2 to the power of k, where k is a difference between the second subcarrier spacing index and the first subcarrier spacing index; the slot aggregation level is a ratio of the slot duration of the first subcarrier spacing to the slot duration of the second subcarrier spacing; the slot aggregation level is a ratio of the number of second symbols to the number of first symbols; or the slot aggregation level is a ratio of the number of guard interval symbols among the second symbols to the number of guard interval symbols among the first symbols.

In an embodiment, determining, according to the slot aggregation level, the number of first symbols and the first symbol position, the resource mapping manner for the sidelink communication using the second subcarrier spacing includes the following.

The number of second symbols, the number of effective second symbols and a second symbol position are determined according to the slot aggregation level, the number of first symbols and the first symbol position; and one transmission block is mapped according to second symbols corresponding to the number of effective second symbols and the second symbol position, where the second symbols corresponding to the number of effective second symbols include symbols other than a guard interval symbol among second symbols corresponding the number of second symbols.

In an embodiment, the number of second symbols includes at least one of the following.

The number of second symbols is the number of second symbols within the same time range as the first symbols; or the number of second symbols is a product of the number of first symbols and the slot aggregation level.

In an embodiment, the second symbol position includes at least one of the following.

The second symbol position is a position of the 1st symbol among the second symbols, where the second symbol position is at the same time domain position as a position of the 1st symbol among the first symbols; the second symbol position is a serial number of the 1st symbol among the second symbols, where the serial number is a product of a serial number of the 1st symbol among the first symbols and the slot aggregation level, and a serial number of the 1st symbol in a slot is 0; or the second symbol position is a serial number of the 1st symbol among the second symbols, where the serial number is obtained by adding 1 to a product of a serial number, which is decreased by 1, of a 1st symbol among the first symbols and the slot aggregation level, and a serial number of a 1st symbol in a slot is 1; serial numbers of the second symbols are sequential numbers of all of the second symbols.

In an embodiment, the second symbols further include a guard interval symbol.

The number of guard interval symbols is the same as the slot aggregation level; and the guard interval symbol is the last N symbols among symbols used for the sidelink communication within an aggregated slot obtained from the slot aggregation level, where N is the slot aggregation level.

In an embodiment, determining, according to the slot aggregation level, the number of first symbols and the first symbol position, the resource mapping manner for the sidelink communication using the second subcarrier spacing includes the following.

The number of second symbols, the number of effective second symbols and a second symbol position are determined according to the slot aggregation level, the number of first symbols and the first symbol position; and one transmission block is mapped by selecting, according to the second symbol position, second symbols corresponding to the number of effective first symbols from second symbols corresponding to the number of effective second symbols, where the number of effective first symbols includes the number of symbols other than a guard interval symbol among first symbols corresponding the number of first symbols, and the second symbols corresponding to the number of effective second symbols include symbols other than a guard interval symbol among second symbols corresponding to the number of second symbols.

In an embodiment, mapping one transmission block includes mapping of a first channel corresponding to the one transmission block.

The mapping of the first channel corresponding to the one transmission block includes one of: mapping of a physical sidelink control channel corresponding to the one transmission block; or mapping of a physical sidelink shared channel corresponding to the one transmission block.

In an embodiment, determining, according to the slot aggregation level, the number of first symbols and the first symbol position, the resource mapping manner for the sidelink communication using the second subcarrier spacing includes the following.

The number of second symbols and a second symbol position are determined according to the slot aggregation level, the number of first symbols and the first symbol position; and a second channel or a second signal is mapped according to second symbols corresponding to the number of second symbols and the second symbol position.

In an embodiment, the second channel or the second signal includes at least one of: a sidelink synchronization signal; a physical sidelink discovery channel; a physical sidelink feedback channel; a sidelink positioning signal; or a sidelink channel state information reference signal.

In an embodiment, the number of first symbols and the first symbol position include the predefined number of symbols and a predefined symbol position of a second channel or a second signal under the first subcarrier spacing.

In an embodiment, the number of first symbols and the first symbol position include at least one of the following.

For a physical sidelink feedback channel, the number of first symbols is 2, and the first symbol position is calculated or indicated by a configuration parameter; for a sidelink synchronization signal and channel, the number of first symbols is 14, and the first symbol position is the first symbol in the first slot; for a sidelink discovery channel, both the number of first symbols and the first symbol position are calculated or indicated by a configuration parameter; for a sidelink positioning signal, both the number of first symbols and the first symbol position are calculated or indicated by a configuration parameter; or for a sidelink channel state information reference signal, both the number of first symbols and the first symbol position are calculated or indicated by a configuration parameter.

In an embodiment, the resource mapping method applied to the second communication node further includes the following. A synchronization resource configuration message is sent to the first communication node so that the first communication node determines, according to the synchronization resource configuration message, a resource pool where second symbols corresponding to the second subcarrier spacing are located, where synchronization resources in the resource pool includes: a first-type synchronization resource and a second-type synchronization resource.

In an embodiment, the synchronization resource configuration message includes a first-type synchronization resource configuration message and a second-type synchronization resource configuration message, where the first-type synchronization resource configuration message is used for indicating the first-type synchronization resource; and the second-type synchronization resource configuration message is used for indicating the second-type synchronization resource.

In an embodiment, when the first-type synchronization resource is mapped in the resource pool, the first-type synchronization resource within a system frame period is excluded; when the second-type synchronization resource is mapped in the resource pool, the second-type synchronization resource within a system frame period is not excluded.

In an embodiment, a bearer message of the synchronization resource configuration message includes one of: a system broadcast message, a dedicated system message or a preconfiguration message.

In an embodiment, an indication manner of the first-type synchronization resource includes: a system predefines the 1st resource in the synchronization resource configuration message as the first-type synchronization resource.

In an embodiment, an indication manner of the first-type synchronization resource includes: one resource among synchronization resources corresponding to the synchronization resource configuration message is indicated as the first-type synchronization resource by using a first-type synchronization resource index.

In an embodiment, an indication manner of the first-type synchronization resource includes: synchronization resources corresponding to the synchronization resource configuration message are indicated by using a bitmap, and a synchronization resource of which the value is 1 in the bitmap is the first-type synchronization resource.

In an embodiment, an indication manner of the first-type synchronization resource includes: the first-type synchronization resource is indicated by a first-type synchronization resource configuration message.

In an embodiment, an indication manner of the second-type synchronization resource includes: a synchronization resource other than the first-type synchronization resource in the synchronization resource configuration message is the second-type synchronization resource.

In an embodiment, an indication manner of the second-type synchronization resource includes: synchronization resources corresponding to the synchronization resource configuration message are indicated by using a bitmap, and a synchronization resource of which the value is 0 in the bitmap is the second-type synchronization resource.

In an embodiment, an indication manner of the second-type synchronization resource includes: the second-type synchronization resource is indicated by a second-type synchronization resource configuration message.

In an embodiment, determining the resource pool where the second symbols corresponding to the second subcarrier spacing are located according to the synchronization resource configuration message includes at least one of the following.

In the case where resource sensing is performed in the resource pool, a resource in a slot corresponding to the second-type synchronization resource is not sensed; in the case where resource selection is performed in the resource pool, a resource in the same slot as the second-type synchronization resource is not selected; in the case where data is sent and a used resource is in the same slot as the second-type synchronization resource, a current sending opportunity is abandoned; or in the case where data is sent and a used resource is in the same slot as the second-type synchronization resource, resource reselection is triggered.

In an embodiment, determining the resource pool where the second symbols corresponding to the second subcarrier spacing are located according to the synchronization resource configuration message includes at least one of the following.

In the case where a feedback message is sent and a used resource is in the same slot as the second-type synchronization resource, a current sending opportunity is abandoned; in the case where a feedback message is received and a used resource is in the same slot as the second-type synchronization resource, a current reception opportunity is abandoned, and a reception result of the current feedback message is configured as negative acknowledgement; a feedback resource and the second-type synchronization resource are configured in different slots; for a synchronization resource in a receiving resource pool, only the first-type synchronization resource is configured; in the case where another signal or channel is sent and a used resource is in the same slot as the second-type synchronization resource, a current sending opportunity is abandoned; or in the case where another signal or channel is received and a used resource is in the same slot as the second-type synchronization resource, a current reception opportunity is abandoned.

For the explanation of the parameters such as the slot aggregation level, the number of first symbols, the first symbol position, the number of second symbols and the second symbol position in the resource mapping method applied to the second communication node, reference can be made to the preceding description of the corresponding parameters in the resource mapping method applied to the first communication node, which will not be repeated here.

In an embodiment, the resource mapping process of sidelink communication is described by using a UE as the first communication node and a base station as the second communication node as an example.

In the embodiment, the UE determines the slot aggregation level N, the number L1 of first symbols and the first symbol position K1 of a current carrier, a current BWP or a current resource pool, and determines, according to the slot aggregation level N, the number L1 of first symbols and the first symbol position K1, the resource mapping manner of symbols when the second subcarrier spacing is used for the sidelink communication. The slot aggregation level N refers to that the number of consecutive slots used for one transmission is N, and the slot aggregation level N is used for characterizing the mapping relationship between the slot of the second carrier spacing and the slot of the first subcarrier spacing. The number L1 of first symbols refers to that the number of first symbols in one slot is L1, or the number of symbols contained in one transmission time interval (TTI) is L1, or the number of symbols used for transmitting one transmission block (TB) is L1. The first symbol position K1 is the start symbol position of the first symbols in the first slot, where the first symbol position K1 may be the first symbol in the first slot or one of symbols in the first slot. The resource mapping manner includes at least one of: uniformly mapping all symbols within an aggregated slot, that is, one TB is continuously mapped according to N * (L1 - 1) effective symbols; or N TBs are mapped on (L1 - 1) effective symbols respectively. The last N symbols are guard interval (GAP) symbols.

FIG. 4 is a configuration diagram of resource mapping according to an embodiment of the present application. As shown in FIG. 4, the number L1 of first symbols is 14, the first symbol position K1 is the first symbol (that is, symbol 1) in the slot corresponding to the SCS of 15kHz, the slot aggregation level is 2, and thus it can be determined that the first symbol in the slot corresponding to the second subcarrier spacing of 30kHz is symbol 1, and the slot corresponding to the second subcarrier spacing has 26 effective symbols. Moreover, the guard interval symbol in the slot corresponding to the second subcarrier spacing is placed at the last position (that is, symbol 14 and symbol 14') of the aggregated slot, so alignment of symbols used for the sidelink communication is achieved, and thus communication performance is ensured.

In an embodiment, the process of uniform configuration and resource pool mapping on synchronization resources of a UE within coverage is described by using a UE as the first communication node and a base station as the second communication node as an example.

In the embodiment, the base station sends a synchronization resource configuration message to the UE through a radio resource control (RRC) system information block (SIB) message or RRC proprietary signaling, and configures two synchronization resource groups to the UE through the synchronization resource configuration message. Each synchronization resource group includes a first synchronization resource position, the number of synchronization resources (for example, the number of synchronization resources is 3) within a synchronization period and an interval indication (for example, the interval between two adjacent synchronization resources is 3, which means 3 synchronization resources) of adjacent synchronization resources.

A parameter of a first synchronization resource group is indicated by a first time domain resource parameter, and a parameter of a second synchronization resource group is indicated by a second time domain resource parameter.

In example 1, according to system predefinition, the first sidelink synchronization signal block (S-SBB) resource in a synchronization resource group is the first-type synchronization resource, that is, this resource is excluded during resource pool mapping; synchronization resources other than the first-type synchronization resource in the synchronization resource group are not excluded from the resource pool during resource pool mapping. The first S-SSB resource in the synchronization resource group is the first S-SSB slot within a synchronization period, the S-SSB slot has a time domain offset from the boundary of the synchronization period, and the offset is indicated by the first synchronization resource position.

In example 2, the position of the S-SSB resource of the first-type synchronization resource within a synchronization period is explicitly indicated by signaling. For example, the serial number (such as 2) of the first-type synchronization resource within a period indicates that the second S-SSB resource within the synchronization period is the first-type synchronization resource, and a synchronization resource other than the first-type synchronization resource is the second-type synchronization resource; or the S-SSB resource of the first-type synchronization resource is indicated by a bitmap, that is, a resource of which the value is 0 in the bitmap represents the first-type synchronization resource, a resource of which the value is 1 in the bitmap represents the second-type synchronization resource, and vice versa.

The first-type synchronization resource is excluded during resource pool mapping; the second-type synchronization resource is not excluded during resource pool mapping.

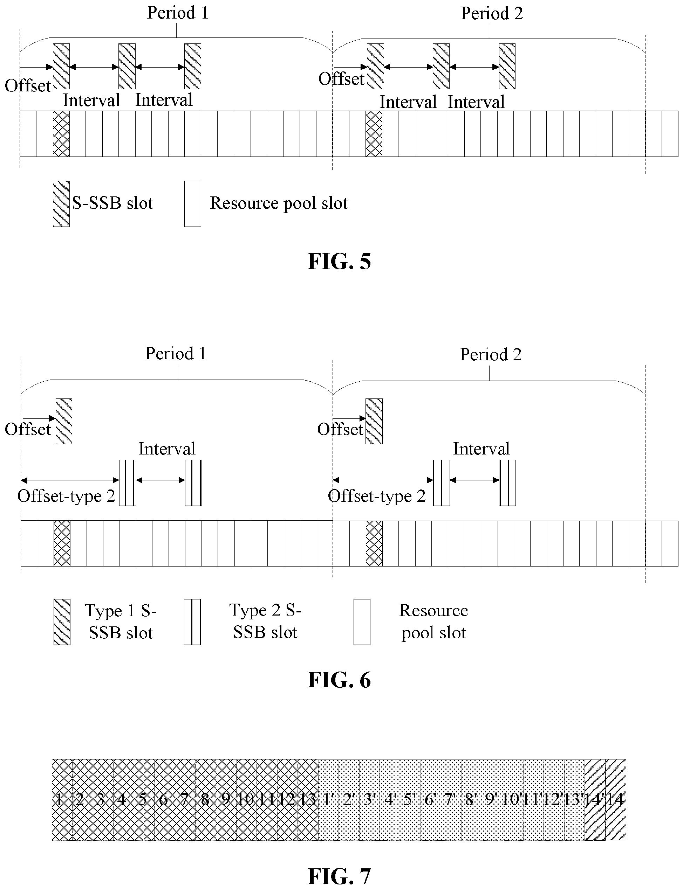

FIG. 5 is a configuration diagram of synchronization resources according to an embodiment of the present application. As shown in FIG. 5, Period 1 represents the first synchronization period, Period 2 represents the second synchronization period, Interval represents the interval between two adjacent synchronization resources, and Offset represents the position of the first synchronized resource. Within a synchronization period, three synchronization resources are configured in a synchronization resource group, where the first synchronization resource is the first-type synchronization resource (such as the synchronization resource corresponding to the first S-SSB slot in Period 1). During resource pool mapping, the first synchronization resource is excluded; the other two synchronization resources (such as the synchronization resources corresponding to the second S-SSB slot and the third S-SSB slot in Period 1 respectively) are second-type synchronization resources and are not excluded during resource pool mapping.

In an embodiment, the process of uniform configuration and resource pool mapping on synchronization resources of a UE without coverage is described by using a UE as the first communication node and a base station as the second communication node as an example.

In the embodiment, the UE acquires a synchronization resource configuration message by using a preconfiguration message, and 3 synchronization resource groups are configured in the synchronization resource configuration message. Each resource group includes: a first synchronization resource position, the number of synchronization resources (for example, the number of synchronization resources is 3) within a synchronization period and an interval indication (for example, the interval between two adjacent synchronization resources is 3, which means 3 synchronization resources) of adj acent synchronization resources.

A parameter of a first synchronization resource group is indicated by a first time domain resource parameter, a parameter of a second synchronization resource group is indicated by a second time domain resource parameter, and a parameter of a third synchronization resource group is indicated by a third time domain resource parameter.

According to system predefinition, the first S-SBB resource in a synchronization resource group is the first-type synchronization resource, that is, this resource is excluded during resource pool mapping; synchronization resources other than the first-type synchronization resource in the synchronization resource group are not excluded from the resource pool during resource pool mapping. The first S-SSB resource in the synchronization resource group is the first S-SSB slot within a synchronization period of the synchronization resource group, the S-SSB slot has a time domain offset from the boundary of the synchronization period, and the offset is indicated by the first synchronization resource position.

In an embodiment, the process of separate configuration and resource pool mapping on synchronization resources is described by using a UE as the first communication node and a base station as the second communication node as an example.

In the embodiment, the base station sends a synchronization resource configuration message to the UE through an RRC SIB message or RRC proprietary signaling and configures 2 synchronization resource groups to the UE through the synchronization resource configuration message, or the UE acquires 2 synchronization resource groups by using a preconfiguration message. Each resource group includes 2 types of synchronization resources. The first-type synchronization resource is indicated by at least one of: a first synchronization resource position, the number of synchronization resources (for example, the number of synchronization resources is 1) within a first synchronization period and an interval indication (for example, the interval between two adjacent synchronization resources is 3, which means 3 synchronization resources) of adj acent first synchronization resources. The second-type synchronization resource is indicated by at least one of: a second synchronization resource position, the number of synchronization resources (for example, the number of synchronization resources is 1) within a second synchronization period and an interval indication (for example, the interval between two adjacent synchronization resources is 3, which means 3 synchronization resources) of adjacent second synchronization resources. A start position of the second-type synchronization resource may be indicated based on a system frame number or may be an offset of a start position of the first-type synchronization resource.

In example 1, multiple groups of synchronization resources (such as 1, 2 or 3 groups of synchronization resources) are configured for the first-type synchronization resource and the second-type synchronization resource.

In example 2, the base station configures multiple synchronization resource groups to the UE, each resource group includes two types of synchronization resources, and the first-type synchronization resource and the second-type synchronization resource are configured in a system predefinition manner. Exemplarily, in the system predefinition manner, the first resource is configured as the first-type synchronization resource, and the fourth resource is configured as the second-type synchronization resource.

In example 3, the base station configures multiple synchronization resource groups to the UE, each resource group includes two types of synchronization resources, and the first-type synchronization resource and the second-type synchronization resource are configured by using resource indexes. Exemplarily, a resource index (for example, the resource index is 2) is used for indicating that the second resource is the first-type synchronization resource, and a resource index (for example, the resource index is 5) is used for indicating that the fifth resource is the second-type synchronization resource.

In example 4, the base station configures multiple synchronization resource groups to the UE, each resource group includes two types of synchronization resources, and the first-type synchronization resource and the second-type synchronization resource are configured by using a bitmap. For example, a bitmap of 1 indicates the first-type synchronization resource; the bitmap of 0 indicates the second-type synchronization resource.

The first-type synchronization resource and the second-type synchronization resources are individually indicated by using different configuration messages. In the embodiment, the first synchronization resource in each resource group uses a dedicated time domain offset indication. Exemplarily, the first-type synchronization resource is indicated by using a first-type synchronization resource configuration message, and the second-type synchronization resource is indicated by using a second-type synchronization resource configuration message.

FIG. 6 is another configuration diagram of synchronization resources according to an embodiment of the present application. As shown in FIG. 6, Period 1 represents the first synchronization period, Period 2 represents the second synchronization period, Interval represents the interval between two adjacent synchronization resources, Offset represents a start position of the first-type synchronization resource, Offset-type 2 represents the value of a time domain offset of a start position of the second-type synchronization resource, Type 1 S-SBB slot represents the slot where the first-type synchronization resource is located, and Type 2 S-SBB slot represents the slot where the second-type synchronization resource is located. In the embodiment, according to the indication of a synchronization resource configuration message, the S-SSB resource of the first-type synchronization resource is excluded during resource pool mapping, and the S-SSB resource of the second-type synchronization resource is not excluded from the resource pool during resource pool mapping.

In an embodiment, the process of configuration and resource pool mapping on synchronization resources is described by using a UE as the first communication node and a base station as the second communication node as an example. In the embodiment, the slot aggregation level is 2. FIG. 7 is another diagram of synchronization resource mapping according to an embodiment of the present application.

In the embodiment, the base station sends a synchronization resource configuration message to the UE through an RRC SIB message or RRC proprietary signaling and configures 2 synchronization resource groups through the synchronization resource configuration message, or the UE acquires 2 synchronization resource groups by using a preconfiguration message. Each resource group includes 2 types of synchronization resources (that is, the first-type synchronization resource and the second-type synchronization resource), and the first-type synchronization resource and the second-type synchronization resource are configured by any one of the synchronization resource configuration schemes in the preceding embodiments. Moreover, a configuration parameter indicates that the slot aggregation level of the synchronization resource is 2, that is, each synchronization resource includes 2 consecutive slots. Within 2 consecutive slots, 2 sidelink synchronization signal blocks (S-SSBs) are transmitted for the sidelink, each S-SSB includes a sidelink primary synchronization signal (S-PSS), a sidelink secondary synchronization signal (S-SSS), and a physical broadcast channel (PSBCH). Each S-SBB uses 13 effective SL symbols, that is, each S-SSB is mapped to 13 effective SL symbols. The first 1 symbol of the second SSB transmission is adjacent to the last 1 symbol of the first SSB transmission, and the last 2 symbols are guard interval symbols. As shown in FIG. 7, the first SSB transmission uses effective symbols #1 to #13, and the second SSB transmission uses effective symbols #1' to #13'. Each transmission sends an S-SSB, and symbols #14 and #14' are GAP symbols. Symbol #1 and symbol #1' may be used as AGC symbols, that is, symbol #1 and symbol #1' are obtained by repeating the following symbol #2 or symbol #2'.

In an embodiment, the configuration process of synchronization resources for sending synchronization symbols is described by using a UE as the first communication node and a base station as the second communication node as an example. In the embodiment, the UE receives a synchronization resource configuration message sent by a network side (such as the base station) to obtain corresponding synchronization resources, or the UE obtains synchronization resources according to a preconfiguration message. The synchronization resource includes one or more (such as 2 or 3) synchronization resource groups, and each synchronization resource group includes one or more first-type synchronization resources and/or one or more second-type synchronization resources.

The UE selects one group of synchronization resources and sends a synchronization signal on the selected synchronization resources. The synchronization resources include the first-type synchronization resource and the second-type synchronization resource.

In an embodiment, the configuration process of synchronization resources corresponding to information borne by a physical sidelink control channel (PSCCH) or a physical sidelink shared channel (PSSCH) is described by using a UE as the first communication node and a base station as the second communication node as an example.

In the embodiment, when performing resource selection, the UE performs at least one of the following.

When performing sensing in a resource pool, the UE does not sense a resource in a slot where the second-type synchronization resource is located.

When performing resource selection in a resource pool, the UE does not select a resource in the same slot as the second-type synchronization resource.

When the UE sends data, if a used resource is in the same slot as the second-type synchronization resource, the UE abandons current sending.

When the UE sends data, if a used resource is in the same slot as the second-type synchronization resource, resource selection is triggered, and the UE selects another resource for sending.

In an embodiment, the configuration process of synchronization resources corresponding to information borne by a physical sidelink feedback channel (PSFCH) is described by using a UE as the first communication node and a base station as the second communication node as an example.

In the embodiment, in the case where the UE feeds back or receives a feedback message through the PSFCH or sends or receives another SL signal or channel, the UE may perform at least one of the following.

When the UE sends ACK/NACK feedback, if a used resource is in the same slot as the second-type synchronization resource, the UE abandons current sending.

When the UE receives ACK/NACK feedback, if a used resource is in the same slot as the second-type synchronization resource, the UE abandons current ACK/NACK reception and determines that the result of the current feedback is NACK.

The UE does not expect that the PSFCH resource is configured in the same slot as the second-type synchronization resource.

The UE receives synchronization resources of a resource pool and configures only the second-type synchronization resource.

When the UE sends another signal/channel, such as an SL positioning reference signal (SL PRS) or an SL channel state information reference signal (SL CSI-RS), if a used resource is in the same slot as the second-type synchronization resource, the UE abandons current sending.

When the UE receives another signal/channel, such as an SL positioning reference signal (SL PRS) or an SL channel state information reference signal (SL CSI-RS), if a used resource is in the same slot as the second-type synchronization resource, the UE abandons current reception.

In an embodiment, SL signals/channels include at least one of: an SL synchronization signal block, S-SSB, configured to carry a synchronization signal and SL broadcast information PSBCH; an SL control channel, PSCCH, configured to carry SL control information SCI; an SL shared channel, PSSCH, configured to carry SL data sending; an SL discovery channel, physical sidelink discovery channel (PSDCH), configured to carry a discovery signal; an SL feedback channel, PSFCH, configured to carry hybrid automatic repeat request (HARQ) feedback information; an SL positioning signal, SL PRS, configured to carry an SL positioning signal; or an SL channel state information reference signal, SL CSI-RS, configured to carry an SL CSI-RS signal.

In an embodiment, the resource pool mapping process that aggregating multiple slots is described by using a UE as the first communication node and a base station as the second communication node as an example. In the embodiment, multiple TBs are transmitted on multiple slots that are aggregated. In the embodiment, two cases where the slot aggregation level is 2 and the slot aggregation level is 4 may be described.

In example one, the slot aggregation level N is 2, the first symbol position K1 is the first symbol, the numberL1 of first symbols is 14, the first subcarrier spacing is 15kHz, and the second subcarrier spacing is 30kHz.

In the embodiment, the UE determines, according to a carrier, a BWP or resource pool configuration information, that the slot aggregation level of the sidelink communication is 2, and the number of symbols used for the sidelink in one slot is 14 (that is, the number L1 of first symbols is 14).

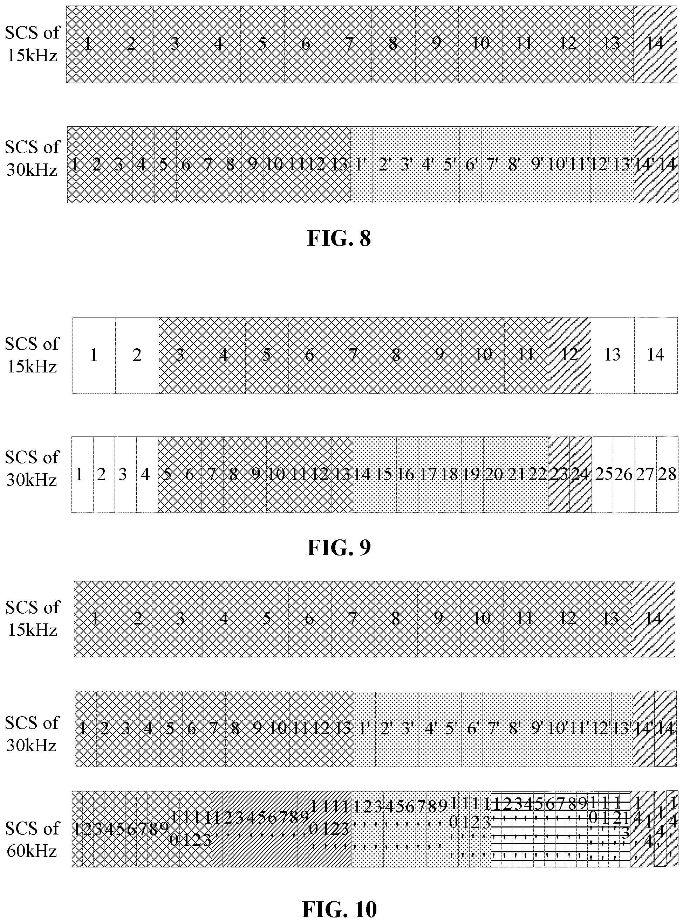

The UE determines, according to the slot aggregation level, the number L1 of first symbols and the first symbol position K1, that the sidelink communication uses 2 consecutive slots for sending. Each transmission or each TB (initial transmission TB and retransmission TB are marked as different TBs) uses 13 effective SL symbols, that is, a PSCCH/PSSCH/PSFCH/SL demodulation reference signal (DMRS)/SL CSI-RS is mapped to 13 effective symbols. The second symbol position K2 is also the first symbol. The first 1 symbol of the second transmission (that is, the second transmitted TB) is adjacent to the last 1 symbol of the first transmission (that is, the first transmitted TB), and the last 2 symbols are guard interval symbols. FIG. 8 is a diagram of resource mapping aggregating multiple slots according to an embodiment of the present application. As shown in FIG. 8, the first transmission uses effective symbols #1 to #13, and the second transmission uses effective symbols #1' to #13'. Each transmission sends a TB, the TB may be a different TB or multiple transmissions of a TB, and symbols #14 and #14' are GAP symbols. Symbol #1 and symbol #1' may be used as AGC symbols, that is, symbol #1 and symbol #1' are obtained by repeating the following symbol #2 or symbol #2'.

As shown in FIG. 8, in the case where the SCS is 15kHz for the sidelink communication, the slot aggregation level of the sidelink communication is 1, a start symbol used for the sidelink in one slot is 1 (that is, the first symbol position K1 is the first symbol), and the number L1 of first symbols is 14.

In the case where the SCS is 30kHz for the sidelink communication, the slot aggregation level of the sidelink communication is 2, a start symbol used for the sidelink in one slot is 1 (that is, the second symbol position K2 is the first symbol), and the number L2 of second symbols is 28, that is, the number of symbols that can actually be used for the SL communication is 28.

In example two, the slot aggregation level N is 2, and the first symbol position K1 is symbol 3, the number L1 of first symbols is 10, the first subcarrier spacing is 15kHz, and the second subcarrier spacing is 30kHz. The UE determines, according to a carrier, a BWP or resource pool configuration information, that the slot aggregation level of the sidelink communication is 2, a start position used for the sidelink in one slot is 3 (that is, the first symbol position K1 is symbol 3) and the number L1 of first symbols is 10.

The UE determines, according to the slot aggregation level, the first symbol position K1 and the number L1 of first symbols, that the sidelink communication uses 20 consecutive symbols. Each transmission or each TB (initial transmission, retransmission marked as different TB) uses 9 effective SL symbols, that is, a PSCCH/PSSCH/PSFCH/SL DMRS/SL CSI-RS is mapped to 9 effective symbols. The first symbol position is symbol #5 (that is, 2 * 2 + 1), that is, the second symbol position K2 is symbol 5. The first 1 symbol of the second transmission is adjacent to the last 1 symbol of the first transmission, and the last 2 symbols are guard interval symbols. FIG. 9 is another diagram of resource mapping aggregating multiple slots according to an embodiment of the present application. As shown in FIG. 9, the first transmission uses effective symbols #5 to #13, and the second transmission uses effective symbols #14 to #22. Each transmission sends a TB, the TB may be a different TB or multiple transmissions of a TB. Symbols #23 and #24 are GAP symbols. Symbol #5 and symbol #14 may be used as AGC symbols, that is, symbol #5 and symbol #14 are obtained by repeating the following symbol #6 or symbol #15.

As shown in FIG. 9, in the case where the SCS is 15kHz for the sidelink communication, the slot aggregation level of the sidelink communication is 1, a start symbol used for the sidelink in one slot is 3 (that is, the first symbol position K1 is symbol 3), and the number L1 of first symbols is 10.

In the case where the SCS is 30kHz for the sidelink communication, the slot aggregation level of the sidelink communication is 2, a start symbol used for the sidelink in one slot is 5 (that is, the second symbol position K2 is symbol 5), and the number L2 of second symbols is 10, that is, the number of symbols that can actually be used for the SL communication is 20.

In example three, the slot aggregation level N is 4, and the first symbol position K1 is the first symbol, the number L1 of first symbols is 14, the first subcarrier spacing is 15kHz, and the second subcarrier spacing is 60kHz.

In the embodiment, the UE determines, according to a carrier, a BWP or resource pool configuration information, that the slot aggregation level of the sidelink communication is 4, and the number of symbols used for the sidelink in one slot is 14 (that is, the number L1 of first symbols is 14). The UE determines, according to the slot aggregation level, the number L1 of first symbols and the first symbol position K1, that the sidelink communication uses 4 consecutive slots for sending. Each transmission or each TB (initial transmission TB and retransmission TB are marked as different TBs) uses 13 effective SL symbols, that is, a PSCCH/PSSCH/PSFCH/SL DMRS/SL CSI-RS is mapped to 13 effective SL symbols. The first 1 symbol of a latter transmission is adjacent to the last 1 symbol of a former transmission, and the last 4 symbols are guard interval (GAP) symbols. FIG. 10 is another diagram of resource mapping aggregating multiple slots according to an embodiment of the present application. As shown in FIG. 10, the first transmission uses effective symbols #1 to #13, the second transmission uses effective symbols #1' to #13', the third transmission uses effective symbols #1" to #13", the fourth transmission uses effective symbols #1‴ to #13"', and so on. Each transmission sends a TB, the TB may be a different TB or multiple transmissions of a TB. The last 4 symbols, that is, symbols #14, #14', #14" and #14‴, are GAP symbols. Symbol #1, symbol #1', symbol #1" and symbol #1‴ may be used as AGC symbols, that is, symbol #1, symbol #1', symbol #1" and symbol #1‴ are obtained by repeating the following symbol #2, symbol #2', symbol #2" and symbol #2'".

As shown in FIG. 10, in the case where the SCS is 15kHz for the sidelink communication, the slot aggregation level of the sidelink communication is 1, a start symbol used for the sidelink in one slot is 1 (that is, the first symbol position K1 is symbol 1), and the number L1 of first symbols is 14.

In the case where the SCS is 30kHz for the sidelink communication, the slot aggregation level of the sidelink communication is 2, a start symbol used for the sidelink in one slot is 5, and the number of symbols is 28, that is, the number of symbols that can actually be used for the SL communication is 28.

In the case where the SCS is 60kHz for the sidelink communication, the slot aggregation level of the sidelink communication is 4, a start symbol used for the sidelink in one slot is 1 (that is, the second symbol position K2 is symbol 1), and the number L2 of second symbols is 56, that is, the number of symbols that can actually be used for the SL transmission is 56.

In an embodiment, the resource pool mapping process that aggregating multiple slots is described by using a UE as the first communication node and a base station as the second communication node as an example. In the embodiment, multiple TBs are transmitted on multiple slots. In the embodiment, the case where the slot aggregation level is 2 may be described. In example one, the slot aggregation level N is 2, the first symbol position K1 is the first symbol, the number L1 of first symbols is 14, the first subcarrier spacing is 15kHz, and the second subcarrier spacing is 30kHz. In the embodiment, the UE determines, according to a carrier, a BWP or resource pool configuration information, that the slot aggregation level of the sidelink communication is 2, and the number of symbols used for the sidelink in one slot is 14 (that is, the number L1 of first symbols is 14).

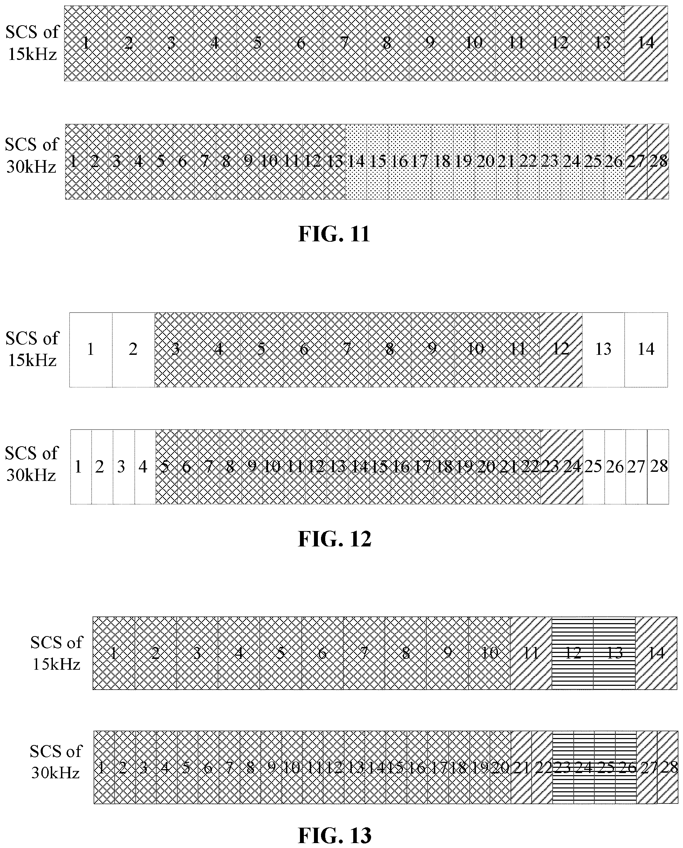

The UE determines, according to the slot aggregation level, the number L1 of first symbols and the first symbol position K1, that the sidelink transmission uses 2 consecutive slots for sending. The number of symbols that can be used for the sidelink (that is, the number of effective symbols) satisfies that 2 * (14 - 1) = 26, that is, a PSCCH/PSSCH/PSFCH/SL DMRS/SL CSI-RS is mapped to 26 effective SL symbols. The last 2 symbols are guard interval (GAP) symbols. FIG. 11 is another diagram of resource mapping aggregating multiple slots according to an embodiment of the present application. As shown in FIG. 11, the SL transmission uses effective symbols #1 to #26, only one TB is sent, and only one PSCCH channel is mapped. Symbols #27 and #28 are GAP symbols. Symbol #1 may be used as the AGC symbol, that is, symbol #1 is obtained by repeating the following symbol #2'.

As shown in FIG. 11, in the case where the SCS is 15kHz for the sidelink communication, the slot aggregation level of the sidelink communication is 1, a start symbol used for the sidelink in one slot is 1 (that is, the first symbol position K1 is symbol 1), and the number L1 of first symbols is 14.

In the case where the SCS is 30kHz for the sidelink communication, the slot aggregation level of the sidelink communication is 2, a start symbol used for the sidelink in one slot is 1 (that is, the second symbol position K2 is symbol 1), and the number L2 of second symbols is 28, that is, the number of symbols that can actually be used for the SL transmission is 28.

In example two, the slot aggregation level N is 2, and the first symbol position K1 is symbol 3, the number L1 of first symbols is 10, the first subcarrier spacing is 15kHz, and the second subcarrier spacing is 30kHz. In the embodiment, the UE determines, according to a carrier, a BWP or resource pool configuration information, that the slot aggregation level of the sidelink communication is 2, a start position used for the sidelink in the first slot is 3 (that is, the first symbol position K1 is symbol 3) and the number L1 of first symbols is 10. The UE determines, according to the slot aggregation level, the first symbol position K1 and the number L1 of first symbols, that the sidelink communication uses 20 consecutive symbols, that is, the SL communication uses 20 consecutive symbols for signal sending. 18 effective symbols are used for signal mapping, that is, the transmission uses effective symbols #4 to #22, that is, a PSCCH/PSSCH/PSFCH/SL DMRS/SL CSI-RS is mapped to 18 symbols. A start symbol is symbol #5 (2 * 2 +1), the number L2 of second symbols is 18, and the last 2 symbols are guard interval symbols, that is, symbols #23 and #24 are GAP symbols. Symbol #5 may be used as the AGC symbol, that is, symbol #5 is obtained by repeating the following symbol #6.

FIG. 12 is another diagram of resource mapping aggregating multiple slots according to an embodiment of the present application. As shown in FIG. 12, in the case where the SCS is 15kHz for the sidelink communication, the slot aggregation level of the sidelink communication is 1, a start symbol used for the sidelink in one slot is 3 (that is, the first symbol position K1 is symbol 3), and the number L1 of first symbols is 10.

In the case where the SCS is 30kHz for the sidelink communication, the slot aggregation level of the sidelink communication is 2, a start symbol used for the sidelink in one slot is 2 (that is, the second symbol position K2 is symbol 5), and the number L2 of second symbols is 20, that is, the number of symbols that can actually be used for the SL transmission is 20.

In example three, the slot aggregation level N is 2, and the first symbol position K1 is the first symbol, the number L1 of first symbols is 14, the first subcarrier spacing is 15kHz, and the second subcarrier spacing is 60kHz for mapping the synchronization resource corresponding to the PSFCH transmission. The UE determines, according to a carrier, a BWP or resource pool configuration information, that the slot aggregation level of the sidelink PSFCH communication is 2, and the first symbol position K1 for the sidelink is #12 and #13. FIG. 13 is another diagram of resource mapping aggregating multiple slots according to an embodiment of the present application. As shown in FIG. 13, it is determined, according to the slot aggregation level and the first symbol position K1, that the sidelink PSFCH transmission uses 4 consecutive symbols, that is, the transmission uses symbols #23 to #26, that is, the PSFHC is mapped to 4 symbols. A start symbol is symbol #23 (13 * 2 - 1), and the number of symbols is 4 (that is, the number L2 of second symbols is 4). Symbol #23 may be used as the AGC symbol, that is, symbol #23 is obtained by repeating the following symbol #24.

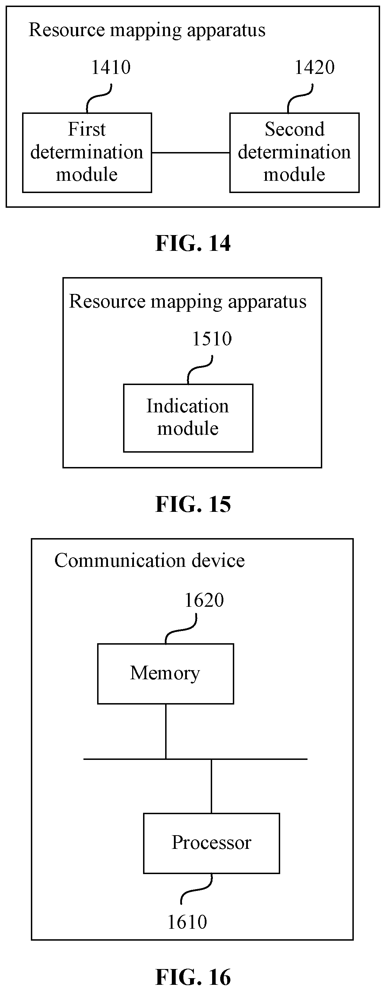

In an embodiment, FIG. 14 is a block diagram of a resource mapping apparatus according to an embodiment of the present application. The embodiment is applied to a first communication node. As shown in FIG. 14, the resource mapping apparatus of the embodiment includes a first determination module 1410 and a second determination module 1420.

The first determination module 1410 is configured to determine a slot aggregation level, the number of first symbols and a first symbol position of sidelink communication.

The number of first symbols refers to the number of first symbols used for the sidelink communication in a first slot; the first symbol position is a start symbol position of the first symbols in the first slot; the first slot is a slot used for the sidelink communication corresponding to a first subcarrier spacing; the slot aggregation level is a mapping relationship between a slot of a second subcarrier spacing and a slot of the first subcarrier spacing.

The second determination module 1420 is configured to determine a resource mapping manner for the sidelink communication using the second subcarrier spacing according to the slot aggregation level, the number of first symbols and the first symbol position.

In an embodiment, the slot aggregation level being the mapping relationship between the slot of the second subcarrier spacing and the slot of the first subcarrier spacing includes at least one of the following.

The slot aggregation level is a ratio of the second subcarrier spacing to the first subcarrier spacing; the slot aggregation level is 2 to the power of k, where k is a difference between a second subcarrier spacing index and a first subcarrier spacing index; the slot aggregation level is a ratio of slot duration of the first subcarrier spacing to slot duration of the second subcarrier spacing; the slot aggregation level is a ratio of the number of second symbols to the number of first symbols; or the slot aggregation level is a ratio of the number of guard interval symbols among second symbols to the number of guard interval symbols among the first symbols.

In an embodiment, the second determination module 1420 performs the following.

The number of second symbols, the number of effective second symbols and a second symbol position are determined according to the slot aggregation level, the number of first symbols and the first symbol position; and one transmission block is mapped according to second symbols corresponding to the number of effective second symbols and the second symbol position, where the second symbols corresponding to the number of effective second symbols include symbols other than a guard interval symbol among second symbols corresponding the number of second symbols.

In an embodiment, the number of second symbols includes at least one of the following.

The number of second symbols is the number of second symbols within the same time range as the first symbols; or the number of second symbols is a product of the number of first symbols and the slot aggregation level.

In an embodiment, the second symbol position includes at least one of the following.

The second symbol position is a position of the 1st symbol among the second symbols, where the second symbol position is at the same time domain position as a position of the 1st symbol among the first symbols; the second symbol position is a serial number of the 1st symbol among the second symbols, where the serial number is a product of a serial number of the 1st symbol among the first symbols and the slot aggregation level, and a serial number of the 1st symbol in a slot is 0; or the second symbol position is a serial number of the 1st symbol among the second symbols, where the serial number is obtained by adding 1 to a product of a serial number, which is decreased by 1, of a 1st symbol among the first symbols and the slot aggregation level, and a serial number of a 1st symbol in a slot is 1; serial numbers of the second symbols are sequential numbers of all of the second symbols.

In an embodiment, the second symbols further include a guard interval symbol.

The number of guard interval symbols is the same as the slot aggregation level; and the guard interval symbol is the last N symbols among symbols used for the sidelink communication within an aggregated slot obtained from the slot aggregation level, where N is the slot aggregation level.

In an embodiment, the second determination module 1420 performs the following.

The number of second symbols, the number of effective second symbols and a second symbol position are determined according to the slot aggregation level, the number of first symbols and the first symbol position; and one transmission block is mapped by selecting, according to the second symbol position, second symbols corresponding to the number of effective first symbols from second symbols corresponding to the number of effective second symbols, where the number of effective first symbols includes the number of symbols other than a guard interval symbol among first symbols corresponding the number of first symbols, and the second symbols corresponding to the number of effective second symbols include symbols other than a guard interval symbol among second symbols corresponding to the number of second symbols.

In an embodiment, mapping one transmission block includes mapping of a first channel corresponding to the one transmission block.

The mapping of the first channel corresponding to the one transmission block includes one of: mapping of a physical sidelink control channel corresponding to the one transmission block; or mapping of a physical sidelink shared channel corresponding to the one transmission block.

In an embodiment, the second determination module 1420 performs the following.

The number of second symbols and a second symbol position are determined according to the slot aggregation level, the number of first symbols and the first symbol position; and a second channel or a second signal is mapped according to second symbols corresponding to the number of second symbols and the second symbol position.

In an embodiment, the second channel or the second signal includes at least one of: a sidelink synchronization signal; a physical sidelink discovery channel; a physical sidelink feedback channel; a sidelink positioning signal; or a sidelink channel state information reference signal.

In an embodiment, the number of first symbols and the first symbol position include the predefined number of symbols and a predefined symbol position of a second channel or a second signal under the first subcarrier spacing.

In an embodiment, the number of first symbols and the first symbol position include at least one of the following.

For a physical sidelink feedback channel, the number of first symbols is 2, and the first symbol position is calculated or indicated by a configuration parameter; for a sidelink synchronization signal and channel, the number of first symbols is 14, and the first symbol position is the first symbol in the first slot; for a sidelink discovery channel, both the number of first symbols and the first symbol position are calculated or indicated by a configuration parameter; for a sidelink positioning signal, both the number of first symbols and the first symbol position are calculated or indicated by a configuration parameter; or for a sidelink channel state information reference signal, both the number of first symbols and the first symbol position are calculated or indicated by a configuration parameter.

In an embodiment, the resource mapping apparatus applied to the first communication node further includes a receiver and a third determination module.

The receiver is configured to receive a synchronization resource configuration message sent by the second communication node, and the third determination module is configured to determine a resource pool where second symbols corresponding to the second subcarrier spacing are located according to the synchronization resource configuration message, where synchronization resources in the resource pool include a first-type synchronization resource and a second-type synchronization resource.

In an embodiment, the synchronization resource configuration message includes a first-type synchronization resource configuration message and a second-type synchronization resource configuration message, where the first-type synchronization resource configuration message is used for indicating the first-type synchronization resource; and the second-type synchronization resource configuration message is used for indicating the second-type synchronization resource.

In an embodiment, when the first-type synchronization resource is mapped in the resource pool, the first-type synchronization resource within a system frame period is excluded; when the second-type synchronization resource is mapped in the resource pool, the second-type synchronization resource within a system frame period is not excluded.

In an embodiment, a bearer message of the synchronization resource configuration message includes one of: a system broadcast message, a dedicated system message or a preconfiguration message.

In an embodiment, an indication manner of the first-type synchronization resource includes the following.

A system predefines the first resource in the synchronization resource configuration message as the first-type synchronization resource.

In an embodiment, an indication manner of the first-type synchronization resource includes the following.

One resource among synchronization resources corresponding to the synchronization resource configuration message is indicated as the first-type synchronization resource by using a first-type synchronization resource index.

In an embodiment, an indication manner of the first-type synchronization resource includes the following.

Synchronization resources corresponding to the synchronization resource configuration message are indicated by using a bitmap, and a synchronization resource of which the value is 1 in the bitmap is the first-type synchronization resource.

In an embodiment, an indication manner of the first-type synchronization resource includes: the first-type synchronization resource is indicated by a first-type synchronization resource configuration message.

In an embodiment, an indication manner of the second-type synchronization resource includes: a synchronization resource other than the first-type synchronization resource in the synchronization resource configuration message is the second-type synchronization resource.

In an embodiment, an indication manner of the second-type synchronization resource includes: synchronization resources corresponding to the synchronization resource configuration message are indicated by using a bitmap, and a synchronization resource of which the value is 0 in the bitmap is the second-type synchronization resource.

In an embodiment, an indication manner of the second-type synchronization resource includes: the second-type synchronization resource is indicated by a second-type synchronization resource configuration message.

In an embodiment, the third determination module performs at least one of the following.

In the case where resource sensing is performed in the resource pool, a resource in a slot corresponding to the second-type synchronization resource is not sensed; in the case where resource selection is performed in the resource pool, a resource in the same slot as the second-type synchronization resource is not selected; in the case where data is sent and a used resource is in the same slot as the second-type synchronization resource, a current sending opportunity is abandoned; or in the case where data is sent and a used resource is in the same slot as the second-type synchronization resource, resource reselection is triggered.

In an embodiment, the third determination module performs at least one of the following.

In the case where a feedback message is sent and a used resource is in the same slot as the second-type synchronization resource, a current sending opportunity is abandoned; in the case where a feedback message is received and a used resource is in the same slot as the second-type synchronization resource, a current reception opportunity is abandoned, and a reception result of the current feedback message is configured as negative acknowledgement; a feedback resource and the second-type synchronization resource are configured in different slots; for a synchronization resource in a receiving resource pool, only the first-type synchronization resource is configured; in the case where another signal or channel is sent and a used resource is in the same slot as the second-type synchronization resource, a current sending opportunity is abandoned; or in the case where another signal or channel is received and a used resource is in the same slot as the second-type synchronization resource, a current reception opportunity is abandoned.

The resource mapping apparatus provided in the embodiment is configured to perform the resource mapping method applied to the first communication node according to the embodiment shown in FIG. 2. The implementation principles and effects of the resource mapping apparatus provided in the embodiment are similar to those of the resource mapping method applied to the first communication node according to the embodiment shown in FIG. 2 and thus are not repeated here.

In an embodiment, FIG. 15 is a block diagram of another resource mapping apparatus according to an embodiment of the present application. The embodiment is applied to a second communication node. As shown in FIG. 15, the resource mapping apparatus in the embodiment includes an indication module 1510.

The indication module 1510 is configured to indicate to a first communication node a parameter related to a slot aggregation level, the number of first symbols and a first symbol position of sidelink communication so that the first communication node determines, according to the parameter related to the slot aggregation level, the number of first symbols and the first symbol position, a resource mapping manner for sidelink communication using a second subcarrier spacing.

In an embodiment, a slot aggregation level being a mapping relationship between a slot of the second subcarrier spacing and a slot of a first subcarrier spacing includes at least one of the following.

The slot aggregation level is a ratio of the second subcarrier spacing to the first subcarrier spacing; the slot aggregation level is 2 to the power of k, where k is a difference between a second subcarrier spacing index and a first subcarrier spacing index; the slot aggregation level is a ratio of slot duration of the first subcarrier spacing to slot duration of the second subcarrier spacing; the slot aggregation level is a ratio of the number of second symbols to the number of first symbols; or the slot aggregation level is a ratio of the number of guard interval symbols among second symbols to the number of guard interval symbols among the first symbols.

In an embodiment, determining, according to the slot aggregation level, the number of first symbols and the first symbol position, the resource mapping manner for the sidelink communication using the second subcarrier spacing includes the following.

The number of second symbols, the number of effective second symbols and a second symbol position are determined according to the slot aggregation level, the number of first symbols and the first symbol position; and one transmission block is mapped according to second symbols corresponding to the number of effective second symbols and the second symbol position, where the second symbols corresponding to the number of effective second symbols include symbols other than a guard interval symbol among second symbols corresponding the number of second symbols.

In an embodiment, the number of second symbols includes at least one of the following.

The number of second symbols is the number of second symbols within the same time range as the first symbols; or the number of second symbols is a product of the number of first symbols and the slot aggregation level.

In an embodiment, the second symbol position includes at least one of the following.

The second symbol position is a position of the 1st symbol among the second symbols, where the second symbol position is at the same time domain position as a position of the 1st symbol among the first symbols; the second symbol position is a serial number of the 1st symbol among the second symbols, where the serial number is a product of a serial number of the 1st symbol among the first symbols and the slot aggregation level, and a serial number of the first symbol in a slot is 0; or the second symbol position is a serial number of the 1st symbol among the second symbols, where the serial number is obtained by adding 1 to a product of a serial number, which is decreased by 1, of a 1st symbol among the first symbols and the slot aggregation level, and a serial number of a 1st symbol in a slot is 1; serial numbers of the second symbols are sequential numbers of all of the second symbols.

In an embodiment, the second symbols further include a guard interval symbol.

The number of guard interval symbols is the same as the slot aggregation level; and the guard interval symbol is the last N symbols among symbols used for the sidelink communication within an aggregated slot obtained from the slot aggregation level, where N is the slot aggregation level.

In an embodiment, determining, according to the slot aggregation level, the number of first symbols and the first symbol position, the resource mapping manner for the sidelink communication using the second subcarrier spacing includes the following.

The number of second symbols, the number of effective second symbols and a second symbol position are determined according to the slot aggregation level, the number of first symbols and the first symbol position; and one transmission block is mapped by selecting, according to the second symbol position, second symbols corresponding to the number of effective first symbols from second symbols corresponding to the number of effective second symbols, where the number of effective first symbols includes the number of symbols other than a guard interval symbol among first symbols corresponding the number of first symbols, and the second symbols corresponding to the number of effective second symbols include symbols other than a guard interval symbol among second symbols corresponding to the number of second symbols.

In an embodiment, mapping one transmission block includes mapping of a first channel corresponding to the one transmission block.

The mapping of the first channel corresponding to the one transmission block includes one of: mapping of a physical sidelink control channel corresponding to the one transmission block; or mapping of a physical sidelink shared channel corresponding to the one transmission block.

In an embodiment, determining, according to the slot aggregation level, the number of first symbols and the first symbol position, the resource mapping manner for the sidelink communication using the second subcarrier spacing includes the following.

The number of second symbols and a second symbol position are determined according to the slot aggregation level, the number of first symbols and the first symbol position; and a second channel or a second signal is mapped according to second symbols corresponding to the number of second symbols and the second symbol position.

In an embodiment, the second channel or the second signal includes at least one of: a sidelink synchronization signal; a physical sidelink discovery channel; a physical sidelink feedback channel; a sidelink positioning signal; or a sidelink channel state information reference signal.

In an embodiment, the number of first symbols and the first symbol position include the predefined number of symbols and a predefined symbol position of a second channel or a second signal under the first subcarrier spacing.

In an embodiment, the number of first symbols and the first symbol position include at least one of the following.

For a physical sidelink feedback channel, the number of first symbols is 2, and the first symbol position is calculated or indicated by a configuration parameter; for a sidelink synchronization signal and channel, the number of first symbols is 14, and the first symbol position is the first symbol in the first slot; for a sidelink discovery channel, both the number of first symbols and the first symbol position are calculated or indicated by a configuration parameter; for a sidelink positioning signal, both the number of first symbols and the first symbol position are calculated or indicated by a configuration parameter; or for a sidelink channel state information reference signal, both the number of first symbols and the first symbol position are calculated or indicated by a configuration parameter.

In an embodiment, the resource mapping method applied to the second communication node further includes the following. A synchronization resource configuration message is sent to the first communication node so that the first communication node determines, according to the synchronization resource configuration message, a resource pool where second symbols corresponding to the second subcarrier spacing are located, where synchronization resources in the resource pool includes: a first-type synchronization resource and a second-type synchronization resource.

In an embodiment, the synchronization resource configuration message includes a first-type synchronization resource configuration message and a second-type synchronization resource configuration message, where the first-type synchronization resource configuration message is used for indicating the first-type synchronization resource; and the second-type synchronization resource configuration message is used for indicating the second-type synchronization resource.

In an embodiment, when the first-type synchronization resource is mapped in the resource pool, the first-type synchronization resource within a system frame period is excluded; when the second-type synchronization resource is mapped in the resource pool, the second-type synchronization resource within a system frame period is not excluded.

In an embodiment, a bearer message of the synchronization resource configuration message includes one of: a system broadcast message, a dedicated system message or a preconfiguration message.

In an embodiment, an indication manner of the first-type synchronization resource includes the following.

A system predefines the first resource in the synchronization resource configuration message as the first-type synchronization resource.

In an embodiment, an indication manner of the first-type synchronization resource includes the following.

One resource among synchronization resources corresponding to the synchronization resource configuration message is indicated as the first-type synchronization resource by using a first-type synchronization resource index.

In an embodiment, an indication manner of the first-type synchronization resource includes the following.

Synchronization resources corresponding to the synchronization resource configuration message are indicated by using a bitmap, and a synchronization resource of which the value is 1 in the bitmap is the first-type synchronization resource.

In an embodiment, an indication manner of the first-type synchronization resource includes the following.

The first-type synchronization resource is indicated by a first-type synchronization resource configuration message.

In an embodiment, an indication manner of the second-type synchronization resource includes the following.

A synchronization resource other than the first-type synchronization resource in the synchronization resource configuration message is the second-type synchronization resource.

In an embodiment, an indication manner of the second-type synchronization resource includes the following.

Synchronization resources corresponding to the synchronization resource configuration message are indicated by using a bitmap, and a synchronization resource of which the value is 0 in the bitmap is the second-type synchronization resource.

In an embodiment, an indication manner of the second-type synchronization resource includes the following.

The second-type synchronization resource is indicated by a second-type synchronization resource configuration message.

In an embodiment, determining the resource pool where the second symbols corresponding to the second subcarrier spacing are located according to the synchronization resource configuration message includes at least one of the following.

In the case where resource sensing is performed in the resource pool, a resource in a slot corresponding to the second-type synchronization resource is not sensed; in the case where resource selection is performed in the resource pool, a resource in the same slot as the second-type synchronization resource is not selected; in the case where data is sent and a used resource is in the same slot as the second-type synchronization resource, a current sending opportunity is abandoned; or in the case where data is sent and a used resource is in the same slot as the second-type synchronization resource, resource reselection is triggered.

In an embodiment, determining the resource pool where the second symbols corresponding to the second subcarrier spacing are located according to the synchronization resource configuration message includes at least one of the following.

In the case where a feedback message is sent and a used resource is in the same slot as the second-type synchronization resource, a current sending opportunity is abandoned; in the case where a feedback message is received and a used resource is in the same slot as the second-type synchronization resource, a current reception opportunity is abandoned, and a reception result of the current feedback message is configured as negative acknowledgement; a feedback resource and the second-type synchronization resource are configured in different slots; for a synchronization resource in a receiving resource pool, only the first-type synchronization resource is configured; in the case where another signal or channel is sent and a used resource is in the same slot as the second-type synchronization resource, a current sending opportunity is abandoned; or in the case where another signal or channel is received and a used resource is in the same slot as the second-type synchronization resource, a current reception opportunity is abandoned.

The resource mapping apparatus provided in the embodiment is configured to perform the resource mapping method applied to the second communication node according to the embodiment shown in FIG. 3. The implementation principles and effects of the resource mapping apparatus provided in the embodiment are similar to those of the resource mapping method applied to the second communication node according to the embodiment shown in FIG. 3 and thus are not repeated here.

In an embodiment, FIG. 16 is a structural diagram of a communication device according to an embodiment of the present application. As shown in FIG. 16, the device provided in the present application includes a processor 1610 and a memory 1620. One or more processors 1610 may be provided in the device, with one processor 1610 shown as an example in FIG. 16. One or more memories 1620 may be provided in the device, with one memory 1620 shown as an example in FIG. 16. The processor 1610 and memory 1620 of the device may be connected by a bus or in other manners. The connection by a bus is taken as an example in FIG. 16. In the embodiment, the device may be a resource management component.

As a computer-readable storage medium, the memory 1620 may be configured to store software programs and computer-executable programs and modules, such as program instructions/modules (for example, the first determination module 1410 and the second determination module 1420 in the resource mapping apparatus) corresponding to the device according to any embodiment of the present application. The memory 1620 may include a program storage region and a data storage region, where the program storage region may store an operating system and an application program required by at least one function, and the data storage region may store data created depending on the use of the device. Additionally, the memory 1620 may include a high-speed random-access memory and may also include a nonvolatile memory such as at least one magnetic disk memory, a flash memory or another nonvolatile solid-state memory. In some examples, the memory 1620 may include memories which are remotely disposed relative to the processor 1610, and these remote memories may be connected to the device via a network. Examples of the preceding network include, but are not limited to, the Internet, an intranet, a local area network, a mobile communication network and a combination thereof.

When the communication device is the first communication node, the device may be configured to perform the resource mapping method applied to the first communication node according to any of the preceding embodiments and has corresponding functions and effects.

When the communication device is the second communication node, the device may be configured to perform the resource mapping method applied to the second communication node according to any of the preceding embodiments and has corresponding functions and effects.

An embodiment of the present application further provides a storage medium including a computer-executable instruction which, when executed by a computer processor, is configured to perform a resource mapping method applied to the first communication node. The method includes the following. A slot aggregation level, the number of first symbols and a first symbol position of sidelink communication are determined. A resource mapping manner for sidelink communication using a second subcarrier spacing is determined according to the slot aggregation level, the number of first symbols and the first symbol position. The number of first symbols refers to the number of first symbols used for the sidelink communication in a first slot; the first symbol position is a start symbol position of the first symbols in the first slot; the first slot is a slot used for the sidelink communication corresponding to a first subcarrier spacing; the slot aggregation level is a mapping relationship between a slot of the second subcarrier spacing and a slot of the first subcarrier spacing.

An embodiment of the present application further provides a storage medium including a computer-executable instruction which, when executed by a computer processor, is configured to perform a resource mapping method applied to the second communication node. The method includes the following. A parameter related to a slot aggregation level, the number of first symbols and a first symbol position of sidelink communication are indicated to a first communication node so that the first communication node determines, according to the parameter related to the slot aggregation level, the number of first symbols and the first symbol position, a resource mapping manner for sidelink communication using a second subcarrier spacing.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A resource mapping method, the method being applied to a first communication node and comprising:
determining a slot aggregation level, a number of first symbols and a first symbol position of sidelink communication; and
determining, according to the slot aggregation level, the number of first symbols and the first symbol position, a resource mapping manner for sidelink communication using a second subcarrier spacing;
wherein the number of first symbols refers to a number of first symbols used for the sidelink communication in a first slot; the first symbol position is a start symbol position of the first symbols in the first slot; the first slot is a slot used for the sidelink communication and corresponding to a first subcarrier spacing; the slot aggregation level is a mapping relationship between a slot of the second subcarrier spacing and the first slot of the first subcarrier spacing.

2. The method according to claim 1, wherein the slot aggregation level comprises at least one of:
the slot aggregation level being a ratio of the second subcarrier spacing to the first subcarrier spacing;
the slot aggregation level being 2 to the power of k, wherein k is a difference between a second subcarrier spacing index and a first subcarrier spacing index;
the slot aggregation level being a ratio of slot duration of the first subcarrier spacing to slot duration of the second subcarrier spacing;
the slot aggregation level being a ratio of a number of second symbols to the number of first symbols; or
the slot aggregation level being a ratio of a number of guard interval symbols among second symbols to a number of guard interval symbols among the first symbols.

3. The method according to claim 1, wherein determining, according to the slot aggregation level, the number of first symbols and the first symbol position, the resource mapping manner for the sidelink communication using the second subcarrier spacing comprises:
determining a number of second symbols, a number of effective second symbols and a second symbol position according to the slot aggregation level, the number of first symbols and the first symbol position; and
mapping one transmission block according to second symbols corresponding to the number of effective second symbols and the second symbol position, wherein the second symbols corresponding to the number of effective second symbols comprise symbols other than a guard interval symbol among second symbols corresponding the number of second symbols.

4. The method according to claim 2, wherein the number of second symbols comprises at least one of:
the number of second symbols being a number of second symbols within a same time range as the first symbols; or
the number of second symbols being a product of the number of first symbols and the slot aggregation level.

5. The method according to claim 2, wherein the second symbol position comprises at least one of:
the second symbol position being a position of a 1st symbol among the second symbols, wherein the second symbol position is at a same time domain position as a position of a 1st symbol among the first symbols;
the second symbol position being a serial number of a 1st symbol among the second symbols, wherein the serial number is a product of a serial number of a 1st symbol among the first symbols and the slot aggregation level, and a serial number of a 1st symbol in a slot is 0; or
the second symbol position being a serial number of a 1st symbol among the second symbols, wherein the serial number is obtained by adding 1 to a product of a serial number, which is decreased by 1, of a 1st symbol among the first symbols and the slot aggregation level, and a serial number of a 1st symbol in a slot is 1;
wherein serial numbers of the second symbols are sequential numbers of all of the second symbols.

6. The method according to claim 2, wherein the second symbols further comprise:
at least one guard interval symbol, wherein a number of the at least one guard interval symbol is same as the slot aggregation level;
wherein the at least one guard interval symbol is last N symbols among symbols used for the sidelink communication in an aggregated slot obtained from the slot aggregation level, wherein N is the slot aggregation level.

7. The method according to claim 1, wherein determining, according to the slot aggregation level, the number of first symbols and the first symbol position, the resource mapping manner for the sidelink communication using the second subcarrier spacing comprises:
determining a number of second symbols, a number of effective second symbols and a second symbol position according to the slot aggregation level, the number of first symbols and the first symbol position; and
mapping one transmission block by selecting, according to the second symbol position, second symbols corresponding to a number of effective first symbols from second symbols corresponding to the number of effective second symbols, wherein the number of effective first symbols comprises a number of symbols other than a guard interval symbol among first symbols corresponding the number of first symbols, and the second symbols corresponding to the number of effective second symbols comprise symbols other than a guard interval symbol among second symbols corresponding to the number of second symbols.

8. The method according to claim 3 or claim 7, wherein mapping the one transmission block comprises mapping of a first channel corresponding to the one transmission block, wherein
the mapping of the first channel corresponding to the one transmission block comprises one of: mapping of a physical sidelink control channel corresponding to the one transmission block; or mapping of a physical sidelink shared channel corresponding to the one transmission block.

9. The method according to claim 1, wherein determining, according to the slot aggregation level, the number of first symbols and the first symbol position, the resource mapping manner for the sidelink communication using the second subcarrier spacing comprises:
determining a number of second symbols and a second symbol position according to the slot aggregation level, the number of first symbols and the first symbol position; and
mapping a second channel or a second signal according to second symbols corresponding to the number of second symbols and the second symbol position.

10. The method according to claim 9, wherein the second channel or the second signal comprises at least one of:
a sidelink synchronization signal;
a physical sidelink discovery channel;
a physical sidelink feedback channel;
a sidelink positioning signal; or
a sidelink channel state information reference signal.

11. The method according to claim 1, wherein the number of first symbols and the first symbol position comprise:
a predefined number of symbols and a predefined symbol position of a second channel under the first subcarrier spacing, or a predefined number of symbols and a predefined symbol position of a second signal under the first subcarrier spacing.

12. The method according to claim 11, wherein the number of first symbols and the first symbol position comprise at least one of:
for a physical sidelink feedback channel, the number of first symbols being 2, and the first symbol position being calculated or indicated by a configuration parameter;
for a sidelink synchronization signal and channel, the number of first symbols being 14, and the first symbol position being a 1st symbol in the first slot;
for a sidelink discovery channel, both the number of first symbols and the first symbol position being calculated or indicated by a configuration parameter;
for a sidelink positioning signal, both the number of first symbols and the first symbol position being calculated or indicated by a configuration parameter; or
for a sidelink channel state information reference signal, both the number of first symbols and the first symbol position being calculated or indicated by a configuration parameter.

13. The method according to claim 1, further comprising:
receiving a synchronization resource configuration message sent by a second communication node; and
determining a resource pool where second symbols corresponding to the second subcarrier spacing are located according to the synchronization resource configuration message, wherein the synchronization resource configuration message is used for indicating a first-type synchronization resource and a second-type synchronization resource.

14. The method according to claim 13, wherein the synchronization resource configuration message comprises a first-type synchronization resource configuration message and a second-type synchronization resource configuration message, wherein
the first-type synchronization resource configuration message is used for indicating the first-type synchronization resource; and
the second-type synchronization resource configuration message is used for indicating the second-type synchronization resource.

15. The method according to claim 13, wherein in a case where the first-type synchronization resource is mapped in the resource pool, a first-type synchronization resource within a system frame period is excluded; and
in a case where the second-type synchronization resource is mapped in the resource pool, a second-type synchronization resource within a system frame period is not excluded.

16. The method according claim 13, wherein a bearer message of the synchronization resource configuration message comprises one of: a system broadcast message, a dedicated system message or a preconfiguration message.

17. The method according to claim 13, wherein an indication manner of the first-type synchronization resource comprises:
a system predefining a first resource in the synchronization resource configuration message as the first-type synchronization resource.

18. The method according to claim 13, wherein an indication manner of the first-type synchronization resource comprises:
indicating, by using a first-type synchronization resource index, one resource among synchronization resources corresponding to the synchronization resource configuration message as the first-type synchronization resource.

19. The method according to claim 13, wherein an indication manner of the first-type synchronization resource comprises:
indicating, by using a bitmap, synchronization resources corresponding to the synchronization resource configuration message, and a synchronization resource of which a value is 1 in the bitmap being the first-type synchronization resource.

20. The method according to claim 13, wherein an indication manner of the first-type synchronization resource comprises:
indicating the first-type synchronization resource by a first-type synchronization resource configuration message.

21. The method according to claim 13, wherein an indication manner of the second-type synchronization resource comprises:
a synchronization resource other than the first-type synchronization resource in the synchronization resource configuration message being the second-type synchronization resource.

22. The method according to claim 13, wherein an indication manner of the second-type synchronization resource comprises:
indicating, by using a bitmap, synchronization resources corresponding to the synchronization resource configuration message, and a synchronization resource of which a value is 0 in the bitmap being the second-type synchronization resource.

23. The method according to claim 13, wherein an indication manner of the second-type synchronization resource comprises:
indicating the second-type synchronization resource by a second-type synchronization resource configuration message.

24. The method according to claim 13, wherein determining the resource pool where the second symbols corresponding to the second subcarrier spacing are located according to the synchronization resource configuration message comprises at least one of:
in a case where resource sensing is performed in the resource pool, not sensing a resource in a slot corresponding to the second-type synchronization resource;
in a case where resource selection is performed in the resource pool, not selecting a resource in a same slot as the second-type synchronization resource;
in a case where data is sent and a used resource is in a same slot as the second-type synchronization resource, abandoning a current sending opportunity; or
in a case where data is sent and a used resource is in a same slot as the second-type synchronization resource, triggering resource reselection.

25. The method according to claim 13, wherein determining the resource pool where the second symbols corresponding to the second subcarrier spacing are located according to the synchronization resource configuration message comprises at least one of:
in a case where a feedback message is sent and a used resource is in a same slot as the second-type synchronization resource, abandoning a current sending opportunity;
in a case where a feedback message is received and a used resource is in a same slot as the second-type synchronization resource, abandoning a current reception opportunity, and configuring a reception result of the current feedback message as negative acknowledgement;
configuring a feedback resource and the second-type synchronization resource in different slots;
for a synchronization resource in a receiving resource pool, configuring only the first-type synchronization resource;
in a case where another signal or channel is sent and a used resource is in a same slot as the second-type synchronization resource, abandoning a current sending opportunity; or
in a case where another signal or channel is received and a used resource is in a same slot as the second-type synchronization resource, abandoning a current reception opportunity.

26. A resource mapping method, the method being applied to a second communication node and comprising:
indicating to a first communication node a parameter related to a slot aggregation level, a number of first symbols and a first symbol position of sidelink communication so that the first communication node determines, according to the parameter related to the slot aggregation level, the number of first symbols and the first symbol position, a resource mapping manner for sidelink communication using a second subcarrier spacing.

27. The method according to claim 26, further comprising:
sending a synchronization resource configuration message to the first communication node so that the first communication node determines, according to the synchronization resource configuration message, a resource pool where second symbols corresponding to the second subcarrier spacing are located, wherein synchronization resources in the resource pool comprise: a first-type synchronization resource and a second-type synchronization resource.

28. A communication device, comprising a memory and at least one processor, wherein
a memory configured to store at least one program; and
the at least one program, when executed by the at least one processor, causes the at least one processor to perform the resource mapping method according to any one of claims 1 to 25 or any one of claims 26 and 27.

29. A storage medium storing a computer program which, when executed by a processor, performs the resource mapping method according to any one of claims 1 to 25 or any one of claims 26 and 27.
